(19) Europäisches Patentamt
European Patent Office
Office européen des brevets

(11) **EP 3 422 562 B1**

(12) **EUROPÄISCHE PATENTSCHRIFT**

(45) Veröffentlichungstag und Bekanntmachung des Hinweises auf die Patenterteilung:
**20.10.2021   Patentblatt 2021/42**

(21) Anmeldenummer: **18180019.4**

(22) Anmeldetag: **27.06.2018**

(51) Int Cl.:
*H02P 25/06* (2016.01)     *H02P 6/00* (2016.01)
*B60L 13/03* (2006.01)     *B65G 54/02* (2006.01)
*H02K 41/03* (2006.01)     *H02K 21/02* (2006.01)

(54) **VERFAHREN ZUM BETREIBEN EINER TRANSPORTEINRICHTUNG IN FORM EINES LANGSTATORLINEARMOTORS**

METHOD FOR OPERATING A TRANSPORT DEVICE IN THE FORM OF A LINEAR MOTOR WITH GUIDEWAY STATOR

PROCÉDÉ DE FONCTIONNEMENT D'UN DISPOSITIF DE TRANSPORT EN FORME DE MOTEUR LINÉAIRE À STATOR LONG

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.06.2017   AT 505372017**

(43) Veröffentlichungstag der Anmeldung:
**02.01.2019   Patentblatt 2019/01**

(60) Teilanmeldung:
**19173456.5 / 3 547 530**

(73) Patentinhaber: **B&R Industrial Automation GmbH
5142 Eggelsberg (AT)**

(72) Erfinder: **Weber, Andreas
5020 Salzburg (AT)**

(74) Vertreter: **Patentanwälte Pinter & Weiss OG
Prinz-Eugen-Straße 70
1040 Wien (AT)**

(56) Entgegenhaltungen:
**EP-A1- 3 109 998      EP-A2- 1 739 812
DE-A1-102012 224 179   DE-A1-102016 112 618
JP-A- H03 169 253**

**Beschreibung**

Die gegenständliche Erfindung betrifft ein Verfahren zum Betreiben einer Transporteinrichtung in Form eines Langstatorlinearmotors bei dem eine Transporteinheit entlang einer Transportstrecke des Langstatorlinearmotors bewegt wird, wobei Antriebsmagnete der Transporteinheit mit Antriebsspulen des Langstatorlinearmotors zur Erzeugung einer Vortriebskraft zusammenwirken, wobei die Antriebsmagnete der Transporteinheit und die Antriebsspulen der Transportstrecke des Langstatorlinearmotors magnetische Spannungsquellen eines sich ausbildenden magnetischen Kreises sind. Weiters betrifft die gegenständliche Erfindung eine Transporteinrichtung in Form eines Langstatorlinearmotors mit zumindest einer Transporteinheit und zumindest einer Transportstrecke sowie eine Verwendung des erfindungsgemäßen Verfahrens und der erfindungsgemäßen Transporteinrichtung.

In so gut wie allen modernen Produktionsanlagen ist es erforderlich, Bauteile oder Komponenten, auch über längere Transportstrecken hinweg, mit Transporteinrichtungen zwischen einzelnen Handhabungs- oder Produktionsstationen zu bewegen. Dazu sind eine Vielzahl von Transport- oder Fördereinrichtungen bekannt. Häufig werden dazu Stetigförderer in verschiedenen Ausführungen eingesetzt. Konventionelle Stetigförderer sind Förderbänder in den verschiedenen Ausführungsformen, bei denen eine Drehbewegung eines elektrischen Antriebs in eine lineare Bewegung des Förderbandes umgesetzt wird. Mit solchen konventionellen Stetigförderern ist man in der Flexibilität erheblich eingeschränkt, insbesondere ist ein individueller Transport von einzelnen Transporteinheiten nicht möglich. Um dem abzuhelfen und um den Anforderungen moderner, flexibler Transporteinrichtungen gerecht zu werden, werden vermehrt sogenannte Langstatorlinearmotoren (LLM) als Ersatz für konventionelle Stetigförderer eingesetzt.

Bei einem Langstatorlinearmotor ist eine Vielzahl von elektrischen Antriebsspulen, die den Stator bilden, nebeneinander entlang einer Transportstrecke ortsfest angeordnet. Auf einer Transporteinheit ist eine Anzahl von Antriebsmagneten, entweder als Permanentmagnete oder als elektrische Spule oder Kurzschlusswicklung, angeordnet, die mit den Antriebsspulen zusammenwirken. Durch das Zusammenwirken der (elektro)magnetischen Felder der Antriebsmagnete und der Antriebsspulen wirkt eine Vortriebskraft auf die Transporteinheit, die die Transporteinheit vorwärtsbewegt. Der Langstatorlinearmotor kann als Synchronmaschine, sowohl selbsterregt oder fremderregt, oder als Asynchronmaschine ausgeführt sein. Durch Ansteuerung der einzelnen Antriebsspulen, zur Regelung des magnetischen Flusses, wird die Größe der Vortriebskraft beeinflusst und die Transporteinheit kann in gewünschter Weise entlang der Transportstrecke bewegt werden. Dabei ist es auch möglich, entlang der Transportstrecke eine Vielzahl von Transporteinheiten anzuordnen, deren Bewegungen einzeln und unabhängig voneinander kontrolliert werden können, indem die jeweils mit einer Transporteinheit zusammenwirkenden Antriebsspulen bestromt werden, in der Regel durch Anlegen einer elektrischen Spannung. Ein Langstatorlinearmotor zeichnet sich insbesondere durch eine bessere und flexiblere Ausnützung über den gesamten Arbeitsbereich der Bewegung (Position, Geschwindigkeit, Beschleunigung), eine individuelle Regelung/Steuerung der Transporteinheiten entlang der Transportstrecke, eine verbesserte Energieausnützung, die Reduktion der Wartungskosten aufgrund der geringeren Anzahl an Verschleißteilen, einen einfachen Austausch der Transporteinheiten, effizientes Monitoring und Fehlerdetektion und eine Optimierung des Produktstromes entlang der Transportstrecke aus. Beispiele solcher Langstatorlinearmotoren können der WO 2013/143783 A1, der US 6,876,107 B2, der US 2013/0074724 A1 oder der WO 2004/103792 A1 entnommen werden.

Ein Langstatorlinearmotor stellt hohe Anforderungen an die Regelung der Bewegung der Transporteinheiten. Hierzu sind entlang der Transportstrecke üblicherweise eine Vielzahl von Reglern angeordnet, die die Statorströme der Antriebsspulen regeln, um die Transporteinheiten wie vorgesehen entlang der Transportstrecke zu bewegen. Für die Bewegung der Transporteinheiten ist es notwendig, dass jede Antriebsspule separat geregelt wird, um eine flüssige, kontrollierte und stabile Bewegung der Transporteinheiten entlang der Transportstrecke zu gewährleisten. Eine aktuelle Position der Transporteinheit kann durch geeignete Sensoren, die auch entlang der Transportstrecke angeordnet sein können, erfasst und den Reglern zur Verfügung gestellt werden. Auf der Transportstrecke bewegt sich aber eine Vielzahl von Transporteinheiten, weshalb durch verschiedene Antriebsspulen verschiedene Transporteinheiten bewegt werden. Die entlang der Transportstrecke bewegten Transporteinheiten können sich aber in ihren Eigenschaften unterscheiden. Beispielsweise können Transporteinheiten verschieden beladen sein, verschiedene Verschleißzustände aufweisen, aufgrund von fertigungstechnischen Imperfektionen verschiedene Führungskräfte bewirken, verschiedene Reibungskräfte bewirken, usw. Ebenso ist es denkbar, dass Transporteinheiten mit unterschiedlichem Design oder unterschiedlicher Baugröße entlang der Transportstrecke bewegt werden. All diese Faktoren beeinflussen aber die Regelung der Bewegung der Transporteinheiten.

Besonders wichtig bei einem Langstatorlinearmotor ist hierbei das Zusammenwirken der Antriebsmagnete der Transporteinheit mit den Antriebsspulen der Transportstrecke, die durch einen Spalt bzw. einen sogenannten Luftspalt voneinander beabstandet sind. Die Antriebsmagneten der Transporteinheit und die Antriebsspulen der Transportstrecke sind magnetische Spannungsquellen und bilden einen gemeinsamen magnetischen Kreis aus. Neben der magnetischen Spannung ist der magnetische Kreis außerdem durch einen magnetischen Widerstand bestimmt, der maßgebend durch den Luftspalt bzw. insbesondere durch die Größe des Spalts und durch die magnetische Permeabilität der Luft im Spalt bestimmt ist.

Die Höhe der, von den magnetischen Spannungsquellen erzeugten magnetischen Spannungen sowie die Größe des magnetischen Widerstandes des magnetischen Kreises bestimmen unmittelbar die elektromagnetischen Eigenschaften des Langstatorlinearmotors, insbesondere den magnetischen Fluss des magnetischen Kreises. Dabei können sich schon kleine Veränderungen der magnetischen Größen, beispielsweise Veränderung des magnetischen Widerstands durch Veränderung der Größe des Luftspalts aufgrund von Verschleiß oder einer fehlerhaften Führung einer Transporteinheit, auswirken. Die Größe des Luftspalts ist in der Regel durch den Aufbau eines Langstatorlinearmotors fest vorgegeben, beispielsweise durch den konstruktiven Aufbau des Langstatorlinearmotors, und wird im Betrieb vorzugsweise nicht geändert. Die magnetische Permeabilität der Luft im Luftspalt ist eine konstante physikalische Größe. Die magnetische Spannung der Antriebsmagnete ist üblicherweise fest vorgegeben, da diese in der Regel als Permanentmagnete ausgeführt sind, und während des Betriebs der Transporteinrichtung unveränderlich. Die magnetische Spannung der Antriebsspulen wird durch die an den Antriebsspulen angelegte elektrische Spannung definiert, deren Höhe üblicherweise von der Regelungseinheit der Transporteinrichtung bestimmt wird.

Das Dokument DE 10 2014 118 335 A1 beschreibt eine Linearantriebseinheit einer Werkzeugmaschine mit einem Magnetspaltveränderungsmechanismus zum Ändern der Größenordnung eines magnetischen Spalts zwischen einem Magneten und einer Spule zur Anpassung der Balance zwischen Schubkraft und Polrucken der Linearantriebseinheit. Dabei wird der Luftspalt im Bereich eines hoch präzisen Bearbeitungsvorganges vergrößert, um die Flussdichte zu reduzieren und damit gleichzeitig auch das Polrucken zu vermindern. Im Bereich einer Bearbeitung, die eine geringe Präzision aber eine hohe Last erfordert, wird der Luftspalt verkleinert. Das erhöht die Flussdichte und damit die Vortriebskraft, allerdings auch das Polrucken. In der DE 10 2014 118 335 A1 wird die Verstellung des Luftspaltes damit für die Verringerung des Polruckens für eine hoch präzise Positionierung des bewegten Teils der Linearantriebseinheit verwendet. Für eine weniger präzise Bearbeitung wird der andere Modus mit verkleinertem Luftspalt gewählt. Die Auswahl des Modi erfolgt durch den Bediener der Werkzeugmaschine und der Modus wird während des Betriebs nicht geändert. Das ist für eine Linearantriebseinheit einer Werkzeugmaschine sinnvoll, für ein Transportsystem mit einem Langstatorlinearmotor aber eher weniger. Bei einem Langstatorlinearmotor wird das mögliche Polrucken daher oftmals durch konstruktive Maßnahmen, beispielsweise im Aufbau des Blechpakets des Stators, reduziert.

Für Transportanwendungen ist es hingegen oftmals erwünscht, die Geschwindigkeit der Transporteinheiten flexibel in einem großen Bereich regeln zu können. In Transportanwendungen gibt es oft Streckenabschnitte, an denen eine Transporteinheit mit hoher Geschwindigkeit zu bewegen ist, beispielsweise ein Rückführungsbereich leerer Transporteinheiten in einer geschlossenen Transportstrecke. Hier kommt es weder auf Genauigkeit, noch auf Einflüsse wie einem Polrucken an. An anderen Streckenabschnitten wird oftmals das Einhalten einer genauen Geschwindigkeit gefordert oder es wird eine hohe Vortriebskraft zum Bewegen hoher Lasten gefordert. Die Antriebsspulen des Langstatorlinearmotors werden einzeln von Leistungselektronikeinheiten bestromt, indem die Leistungselektronikeinheiten an die Antriebsspulen die von der Regelung vorgegebenen Spulenspannungen anlegen. Die Leistungselektronikeinheiten sind natürlich auf einen maximalen Strom oder eine maximale Spannung ausgelegt, womit bei gegebenem konstruktiven Aufbau des Langstatorlinearmotors auch die erreichbare Vortriebskraft und erreichbare Geschwindigkeit einer Transporteinheit vorgegeben ist. Für einen großen Geschwindigkeitsbereich müssen daher die Leistungselektronikeinheiten, aber auch die Antriebsspulen, entsprechend leistungsfähig ausgelegt sein. Bei der hohen Anzahl von Antriebsspulen und Leistungselektronikeinheiten eines Langstatorlinearmotors ist das natürlich mit hohem Aufwand und Kosten verbunden und daher in der Regel unerwünscht.

Bei rotativen Elektromotoren kennt man den sogenannten Feldschwächebetrieb, um die Drehzahl des Elektromotors zu erhöhen. Dabei werden die Antriebsspulen des Elektromotors im Wesentlichen so bestromt, dass ein elektromagnetisches Gegenfeld entsteht, das das Feld der Antriebsmagnete des Elektromotors abschwächt. Dieses Gegenfeld muss natürlich synchron mit dem Läufer des Elektromagneten sein, was hohe Anforderungen an die Regelung stellt. Abgesehen davon stellt die benötigte elektrische Energie zum Aufrechterhalten dieses Gegenfeldes einen reinen Verlust dar, was schon alleine aufgrund der Verlustleistung aus thermischen Gründen nachteilig ist. Zusätzlich muss die Leistungselektronik entsprechende Leistungsreserven aufweisen, um die für das Gegenfeld benötigte elektrische Leistung aufbringen zu können. Das schlägt sich aber unmittelbar in einem höheren Aufwand und damit auch höheren Kosten für die Leistungselektronik nieder. Man könnte nun auch den Langstatorlinearmotor in einem Feldschwächebetrieb betreiben, was aber in diesem Fall noch nachteiliger wäre, weil es viel mehr Antriebsspulen gibt, als in einem rotativen Elektromotor.

Die JP H03 169253 A offenbart offenbart ein Transporteinrichtung in Form eines Langstatorlinearmotors, bei dem eine Transporteinheit entlang einer Transportstrecke bewegt wird, wobei Antriebsmagnete an der Transportstrecke zur Erzeugung einer Vortriebskraft mit Antriebsspulen an der Transporteinheit zusammenwirken, wobei die Antriebsmagnete und die Antriebsspulen magnetische Spannungsquellen eines sich ausbildenden magnetischen Kreises sind. Der magnetische Widerstand wird beim Positionieren auf einen großen Spaltabstand und beim Beschleunigen auf einen geringen Spaltabstand eingestellt. Die Verstelleinrichtung kann in Form von PiezoAktuatoren ausgeführt sein und an der der Transporteinheit zwischen dem Rahmen und einer Linearführung oder zwischen Rahmen und den Spulen angeordnet sein. Die PiezoAktuatoren können auch statorseitig an der Transportstrecke unterhalb der Permanentmagnete oder unterhalb der Führung vorgesehen sein. Nachteilig ist, dass die Spulen an der beweglichen Transporteinheit angeordnet sind, weil dadurch zur Bewegung ständig eine Energieversorgung der Transporteinheit nötig ist.

Die EP 1 739 812 A2 offenbart einen Linearmotor, der in einem Kolbenkompressor angeordnet ist, um einen Verdichtungshub zu erzeugen. Aufgabe der EP 1 739 812 A2 ist es, die Stärke des magnetischen Feldes in Abhängigkeit der Last des Kompressors zu verändern, um den Wirkungsgrad des Linearmotors zu erhöhen. Am Stator des Linearmotors sind dazu Hauptspulen und Zusatzspulen angeordnet. Bei hoher Last wird die Spannung nur an die Hauptspule angelegt, bei niedriger Last wird die Spannung an Haupt- und Zusatzspule angelegt.

Die DE 10 2012 224 179 A1 offenbart ein chirurgisches Instrument (Endoskop) mit einem elektromagnetischen Aktuator. Ein verschiebbares Element ist innerhalb eines Rohres angeordnet. Außerhalb des Rohres ist ein Stator mit einer Spule angeordnet, der ein Magnetfeld erzeugt, mit dem das verschiebbare Element bewegt werden kann. Das Rohr dient zur Verringerung des magnetischen Widerstands. Da das verschiebbare Element innerhalb eines Rohres angeordnet ist, ist die DE 10 2012 224 179 A1 für eine Transporteinrichtung ungeeignet.

DE 10 2016 112 618 A1 offenbart einen rotativen Elektromotor mit einer Flussänderungsvorrichtung, bei der ein Körper mittels eines Aktuators axial in Richtung des Rotors bzw. vom Rotor wegbewegt werden kann, um den magnetischen Fluss zu verändern. Für einen LLM, bei dem eine Transporteinheit entlang einer Transportstrecke, auch über weite Strecken, bewegt wird, ist diese Flussänderungsvorrichtung ungeeignet.

Die EP 3 109 998 A1 offenbart ein Verfahren zur Übergabe einer Transporteinheit in einer Weiche eines doppelseitigen LLM. Dabei werden gegenüberliegende Antriebsspulen im Bereich der Weiche so bestromt, dass eine resultierende Seitenkraft erzeugt wird, durch die die Transporteinheit in eine gewünschte Richtung gelenkt wird. Es werden also die energetischen Randbedingungen der Antriebsspulen verändert, um eine Seitenkraft zu erzeugen, was sehr hohe Anforderungen an die Regelung und an die Leistungselektronik der Antriebsspulen stellt.

Es ist daher die Aufgabe der Erfindung, eine flexiblere Prozessführungen einer Transporteinrichtung in Form eines Langstatorlinearmotors zu ermöglichen, ohne die energetischen Randbedingungen (maximaler Strom bzw. maximale Spannung der Leistungselektronikeinheiten) der Transporteinrichtung zu verändern.

Die Aufgabe wird erfindungsgemäß dadurch gelöst, dass eine Größe des magnetischen Kreises mittels einer Regelungseinheit geregelt wird, indem der magnetische Widerstand und/oder die magnetische Spannung an der Transporteinheit von der Regelungseinheit während der Bewegung der Transporteinheit entlang der Transportstrecke verändert wird.

Dadurch ist es möglich, die Bewegungsgrößen der Transporteinheit (z.B. Vortriebskraft, Geschwindigkeit) während der Bewegung entlang der Transportstrecke gezielt zu beeinflussen. Da die Regelung der Antriebsströme der einzelnen Antriebsspulen eines Langstatorlinearmotors zur Bewegung einer Transporteinheit ohnehin bereits sehr aufwändig ist, wird eine gute Möglichkeit geschaffen, Einfluss auf die Bewegungsgrößen der Transporteinheit zu nehmen, ohne in die Regelung der Antriebsspulen, insbesondere in den implementierten Regler, einzugreifen. Es wird also die Regelstrecke des Langstatorlinearmotors verändert und nicht die Regelung bzw. der Regler. Dadurch können beispielsweise Grenzen von Bewegungsgrößen der Transporteinheit verändert werden, elektrische (ohmsche) Verluste verringert werden oder Kraftverhältnisse an der Transporteinheit beeinflusst werden ohne eine statorseitige Feldschwächeregelung der Antriebsspulen.

Vorzugsweise wird ein Ist-Fluss im magnetischen Kreis ermittelt und die Regelungseinheit regelt den magnetischen Ist-Fluss auf einen definierten magnetischen Soll-Fluss, indem der magnetische Widerstand und/oder die magnetische Spannung an der Transporteinheit von der Regelungseinheit während der Bewegung der Transporteinheit entlang der Transportstrecke verändert wird.

Vorteilhafterweise wird zur Veränderung des magnetischen Widerstands des magnetischen Kreises die Position zumindest eines Antriebsmagnets der Transporteinheit mittels zumindest eines an der Transporteinheit angeordneten und mit dem zumindest einen Antriebsmagnet der Transporteinheit zusammenwirkenden ersten Stellglieds in zumindest einem Bewegungsfreiheitsgrad verändert. Durch die Veränderung der Position zumindest eines Antriebsmagnets kann der magnetische Widerstand gezielt beeinflusst werden, um den magnetischen Fluss des magnetischen Kreises zu verändern. Der zumindest eine Bewegungsfreiheitsgrad kann dabei translatorisch oder rotatorisch sein.

Bevorzugterweise wird zur Veränderung des magnetischen Widerstands des magnetischen Kreises die Position zumindest einer Antriebsspule der Transportstrecke mittels zumindest eines an der Transportstrecke angeordneten und mit der zumindest einen Antriebsspule der Transportstrecke zusammenwirkenden zweiten Stellglieds in zumindest einem Bewegungsfreiheitsgrad verändert. Dadurch kann die Veränderung des magnetischen Widerstandes des magnetischen Kreises während der Bewegung der Transporteinheit statorseitig erfolgen.

Es ist vorteilhaft, wenn zur Veränderung des magnetischen Widerstands des magnetischen Kreises zumindest ein magnetisches Widerstandselement bestimmter magnetischer Permeabilität mittels zumindest eines an der Transporteinheit oder an der Transportstrecke angeordneten dritten Stellglieds in einen Luftspalt zwischen zumindest einem Antriebsmagnet der Transporteinheit und zumindest einer damit zusammenwirkenden Antriebsspule der Transportstrecke eingebracht wird. Dadurch wird eine weitere Möglichkeit geschaffen, den magnetischen Widerstand und folglich den magnetischen Fluss im magnetischen Kreis während der Bewegung der Transporteinheit gezielt zu beeinflussen.

Gemäß einer weiteren vorteilhaften Ausgestaltung der Erfindung wird zur Veränderung des magnetischen Widerstands des magnetischen Kreises zumindest ein magnetisches Widerstandselement bestimmter magnetischer Permeabilität mittels zumindest eines an der Transportstrecke angeordneten vierten Stellglieds in eine, an der Transportstrecke angeordneten Öffnung eingebracht. Dadurch kann der magnetische Widerstand und damit der magnetische Fluss statorseitig verändert werden, ohne in den Luftspalt eingreifen zu müssen.

Vorteilhafterweise wird zur Veränderung der magnetischen Spannung der Antriebsmagnete der Transporteinheit zumindest eine Zusatzspule an der Transporteinheit angeordnet, wobei an die Zusatzspule zur zumindest zeitweisen Erhöhung oder Verringerung der magnetischen Spannung an der Transporteinheit zumindest zeitweise eine elektrische Zusatzspannung angelegt wird, um damit eine, der magnetischen Spannung der Antriebsmagnete gleich- oder entgegengerichtete, magnetische Zusatzspannung zu erzeugen, wodurch der magnetische Fluss erhöht oder verringert wird. Damit wird eine Möglichkeit der Veränderung des magnetischen Flusses des magnetischen Kreises geschaffen, ohne das Erfordernis, die Positionen einzelner Komponenten der Transporteinrichtung (z.B. Antriebsmagnet, Antriebsspule) verändern zu müssen.

Wenn ein, einem konstanten Luftspalt entsprechender magnetischer Soll-Fluss vorgegeben wird und die Rege-lungseinheit den magnetischen Ist-Fluss auf den magnetischen Soll-Fluss regelt, indem der magnetische Widerstand und/oder die magnetische Spannung an der Transporteinheit von der Regelungseinheit verändert wird, wird eine Möglichkeit zur Kompensation von Führungsungenauigkeiten der Transportstrecke geschaffen.

Es ist vorteilhaft, wenn an zumindest einer Seite der Transporteinheit der magnetische Widerstand und/oder die magnetische Spannung an der Transporteinheit der jeweiligen Seite verändert wird, um eine auf die Transporteinheit wirkende Seitenkraft zu erzeugen. Dadurch wird der magnetische Fluss einer Seite relativ zur anderen Seite der Transporteinheit verändert, wodurch es möglich ist, die Transporteinheit an einer Übergabeposition der Transportstrecke in eine gewünschte Richtung zu lenken, da aus der Differenz der magnetischen Flüsse der beiden Seiten der Transporteinheit bei gleichbleibenden Spulenspannungen auf beiden Seiten unterschiedliche magnetische Seitenkräfte resultieren. Die Transporteinheit wird dadurch auf die Seite mit der höheren Seitenkraft abgelenkt, die sich aus dem größeren magnetischen Fluss ergibt.

Bevorzugterweise wird der magnetische Fluss des magnetischen Kreises verringert, indem der magnetische Widerstand und/oder die magnetische Spannung an der Transporteinheit verändert wird. Dadurch ist es möglich, die maximal erzielbare Geschwindigkeit der Transporteinheit zu erhöhen, ohne dabei die elektrischen Randbedingungen zu verändern. Bei gegebener Spulenspannung oder gegebenem Spulenstrom kann eine bestimmte Vortriebskraft erzeugt werden, die die Transporteinheit vorwärtsbewegt. Durch die Bewegung der Transporteinheit wird aber in bekannter Weise durch das Magnetfeld des Antriebsmagnets der bewegten Transporteinheit in den Antriebsspulen eine Spannung induziert, die auch Gegen-EMK (Elektromotorische Kraft) bezeichnet wird und die der angelegten Spulenspannung entgegenwirkt. Die EMK-Spannung begrenzt die maximal erreichbare Geschwindigkeit der Transporteinheit, da die induzierte Spannung der Spulenspannung entgegenwirkt und damit die mögliche Stromaufnahme der Antriebsspule begrenzt wird. Durch Verringerung des magnetischen Flusses kann unter Beibehaltung der Spulenspannung die erzielbare Höchstgeschwindigkeit der Transporteinheit erhöht werden, da aufgrund des verringerten magnetischen Flusses die induzierten EMK-Spannungen verringert werden können.

Die Aufgabe der Erfindung wird weiters durch eine Transporteinrichtung in Form eines Langstatorlinearmotors mit zumindest einer Transporteinheit und zumindest einer Transportstrecke gelöst, wobei in der Transporteinrichtung eine Regelungseinheit vorgesehen ist, um eine Größe des magnetischen Kreises zu regeln, indem der magnetische Widerstand des magnetischen Kreises mittels einer Stelleinrichtung und/oder die magnetische Spannung an der Transporteinheit mittels einer Zusatzspule von der Regelungseinheit während der Bewegung der Transporteinheit entlang der Transportstrecke veränderbar ist.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt

Fig. 1 eine Ausgestaltung einer Transporteinrichtung in Form eines Langstatorlinearmotors,

Fig. 2a eine Draufsicht einer Transporteinheit mit verstellbaren Antriebsmagneten an einem geraden Streckenabschnitt einer Transportstrecke,

Fig. 2b und 2c jeweils eine Draufsicht einer Transporteinheit mit verstellbaren Antriebsmagneten an einem gekrümmten Streckenabschnitt einer Transportstrecke,

Fig. 3a und 3b jeweils eine Draufsicht einer Transporteinheit an einem geraden Streckenabschnitt einer Transportstrecke mit verstellbaren Antriebsspulen,

Fig. 4 einen Querschnitt durch eine Transporteinheit mit Widerstandelementen an einem beidseitigen Streckenabschnitt einer Transportstrecke,

Fig. 4a eine Draufsicht einer Transporteinheit an einem geraden Streckenabschnitt einer Transportstrecke mit statorseitigen Widerstandselementen,

Fig. 5 eine Draufsicht einer Transporteinheit mit Zusatzspulen an einem geraden Streckenabschnitt einer Transportstrecke,

Fig. 6 eine erfindungsgemäße Reglerstruktur,

Fig. 7a und 7b eine Draufsicht einer Transporteinheit in Längsrichtung in einer Übergabeposition einer Transportstrecke.

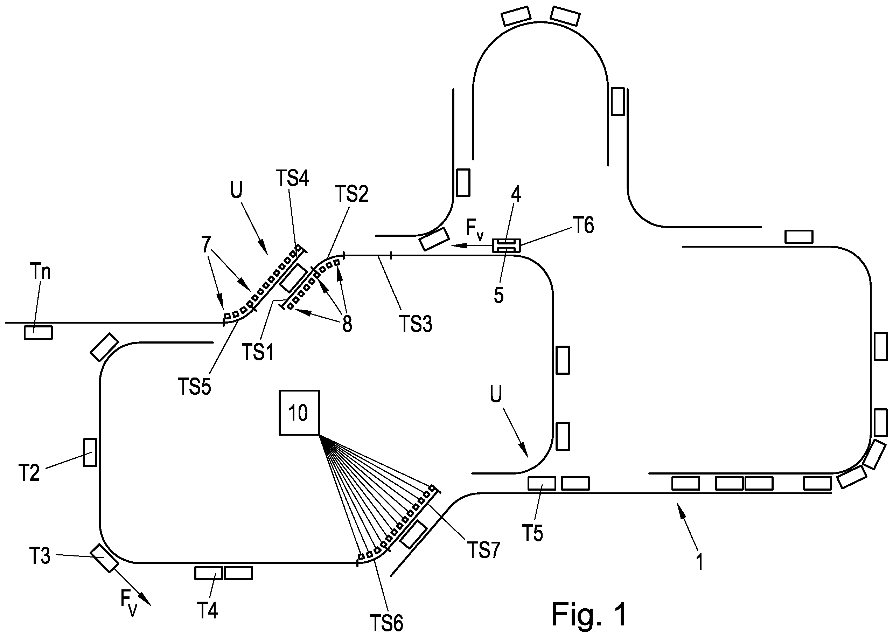

In Fig.1 ist eine Transporteinrichtung 1 in Form eines Langstatorlinearmotors beispielhaft dargestellt. Die Transporteinrichtung 1 besteht aus einer Anzahl von Transportsegmenten TSk (k≥1 ist hierbei ein Index, der für alle vorhandenen Transportsegmente TS1, TS2, TS3, ... steht), von denen aus Gründen der Übersichtlichkeit beispielhaft nur die Transportsegmente TS1 ... TS7 bezeichnet sind. Ein Transportsegment TSk ist jeweils an einer Seite der Transportstrecke 2 angeordnet. Die Transportsegmente TSk bilden verschiedene Streckenabschnitte aus, beispielsweise eine Gerade, Kurven mit unterschiedlichen Winkeln und Radien, Weichen, usw., und können sehr flexibel zusammengesetzt werden, um die Transportstrecke 2 der Transporteinrichtung 1 auszubilden. Die Transportsegmente TSk zusammen bilden damit die ortsfeste Transportstrecke 2, entlang der die Transporteinheiten Tn (n≥1 ist hierbei ein Index, der für alle vorhandenen Transporteinheiten T1, T2, T3, T4, ... steht) bewegt werden können. Dieser modulare Aufbau ermöglicht eine sehr flexible Gestaltung der Transporteinrichtung 1. Die Transportsegmente TSk sind dabei natürlich an einer nicht dargestellten ortsfesten Stützkonstruktion angeordnet. Die Transporteinrichtung 1 ist als Langstatorlinearmotor ausgeführt, bei denen die Transportsegmente TSk in an sich bekannter Weise jeweils einen Teil eines Langstators des Langstatorlinearmotors ausbilden. Entlang der Transportsegmente TSk sind daher in Längsrichtung in bekannter Weise eine Vielzahl von den Stator ausbildenden, ortsfest angeordnete elektrischen Antriebsspulen 7, 8 angeordnet (in Fig.1 aus Gründen der Übersichtlichkeit nur für die Transportsegmente TS1, TS2, TS4, TS5, TS6, TS7 angedeutet), die mit Antriebsmagneten 4, 5 an den Transporteinheiten T1 ... Tn (in Fig.1 aus Gründen der Übersichtlichkeit nur für die Transporteinheit T6 angedeutet) zur Erzeugung einer Vortriebskraft Fv zusammenwirken können. Die Antriebsspulen 7, 8 werden in hinlänglich bekannter Weise durch eine Regelungseinheit 10 angesteuert (in Fig.1 nur angedeutet), um die für die gewünschte Bewegung der Transporteinheiten Tn benötigten Spulenspannungen anzulegen.

Es kann entlang der Transportstrecke 2 auch Streckenabschnitte geben, an denen beidseitig Transportsegmente TSk angeordnet sind, zwischen denen eine Transporteinheit Tn bewegt wird (beispielsweise die Transportsegmente TS1, TS4). Wenn die Transporteinheit Tn an beiden Seiten (in Bewegungsrichtung gesehen) mit Antriebsmagneten 4, 5 ausgestattet ist, dann kann die Transporteinheit Tn auch gleichzeitig mit den beidseitig angeordneten Transportsegmenten TSk, bzw. mit dessen Antriebsspulen 7, 8, zusammenwirken. Damit kann natürlich in Summe auch eine größere Vortriebskraft $F_v$ erzeugt werden.

An der Transporteinheit Tn sind natürlich auch noch (hier aus Gründen der Übersichtlichkeit nicht dargestellte) Führungselemente, wie Rollen, Räder, Gleitflächen, Führungsmagnete, etc., vorgesehen sein, um die Transporteinheit Tn entlang der Transportstrecke 2 zu führen und zu halten, insbesondere auch im Stillstand. Die Führungselemente der Transporteinheit Tn wirken dabei zur Führung mit der Transportstrecke 2 oder den Transportsegmenten TSk zusammen, z.B. in dem sich die Führungselemente an der Transportstrecke abstützen, einhaken, daran abgleiten oder abrollen, etc. Zwischen den Antriebsspulen 7, 8 und den Antriebsmagneten 4, 5 ist ein Luftspalt 20 ausgebildet.

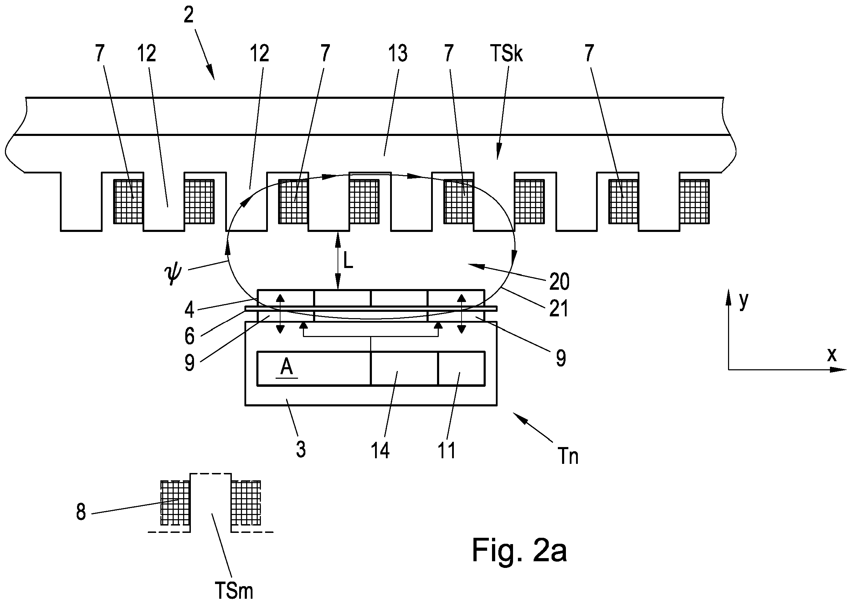

Anhand Fig. 2a soll eine erste Ausgestaltung der Erfindung erläutert werden. Sie zeigt eine Draufsicht einer Ausführungsform einer erfindungsgemäßen Transporteinrichtung 1 an einem geraden Streckenabschnitt mit einem Transportsegment TSk. In bekannter Weise ist zwischen einem Antriebsmagneten 4 der Transporteinheit Tn und den Antriebsspulen 7 des Langstators in Form des Transportsegments TSk ein Luftspalt 20 mit einem Luftspaltabstand L angeordnet. Ein Antriebsmagnet 4 kann als Elektromagnet (Erregungsspulen) und/oder als Permanentmagnet ausgeführt sein. Die Antriebsspulen 7 sind vorzugsweise auf Zähnen 12 eines ferromagnetischen Kerns 13 (beispielsweise ein Eisen Blechpaket) angeordnet. Die Antriebsspulen 7 können aber natürlich auch kernlos ausgeführt sein.

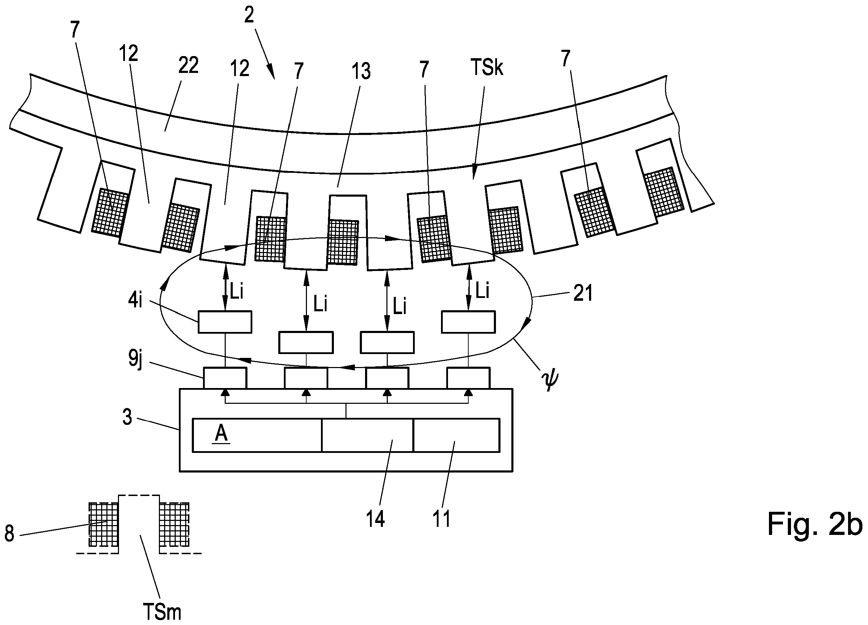

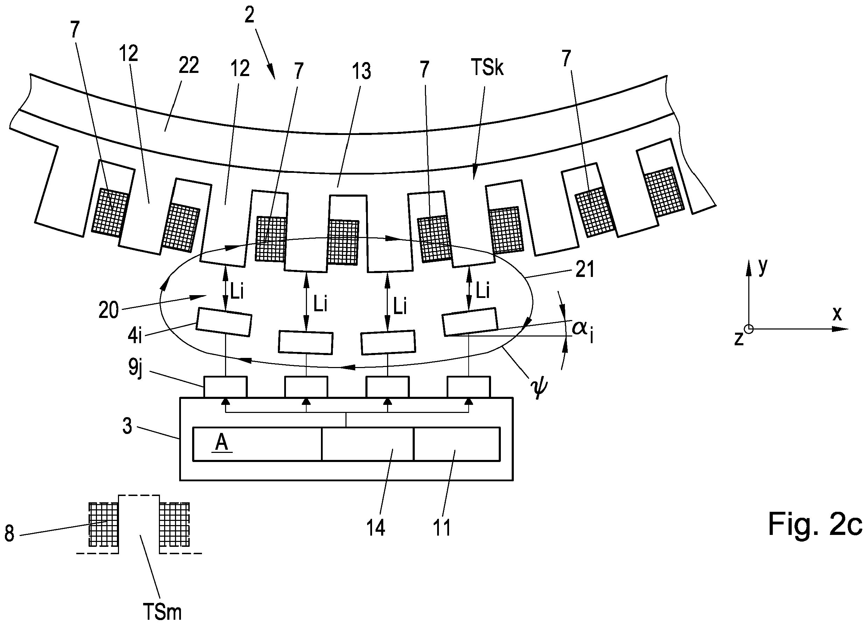

Hierbei bildet sich in bekannter Weise zwischen den bestromten Antriebsspulen 7 und den Antriebsmagneten 4 ein magnetischer Kreis 21 (in Fig.2 angedeutet) aus, in dessen geschlossenem magnetischen Pfad sich der magnetische Fluss $\psi$ einstellt. Jede bestromte Antriebsspule 7 und jeder Antriebsmagnet 4 kann dabei als magnetische Spannungsquelle angesehen werden. Damit ergibt sich eine magnetische Spannungsquelle an der Transportstrecke 2 (aus den einzelnen bestromten Antriebsspulen 7) und eine magnetische Spannungsquelle an der Transporteinheit Tn (aus den einzelnen Antriebsmagneten 4), die jeweils eine magnetische Spannung Um erzeugen. Der magnetische Kreis 21 hat einen magnetischen Widerstand Rm, der sich in bekannter Weise als Summe aus den verschiedenen magnetischen Widerständen der einzelnen Abschnitte des geschlossenen magnetischen Pfades ergibt. Für den magnetischen Kreis 21 gilt dann die bekannte Beziehung Um = Rm·ψ. Erfindungsgemäß kann zur Veränderung des magnetischen Flusses ψ im magnetischen Kreis 21 während der Bewegung der Transporteinheit Tn entlang der Transportstrecke 2 entweder die Höhe der, von den magnetischen Spannungsquellen der Transporteinheit Tn erzeugten magnetischen Spannungen Um des magnetischen Kreises 21 verändert werden und/oder es kann der magnetische Widerstand Rm des magnetischen Kreises 21 verändert werden, wie nachfolgend näher beschrieben wird.

Die Veränderung des magnetischen Widerstandes Rm des magnetischen Kreises 21 oder der magnetischen Spannung Um des magnetischen Kreises 21 an der Transporteinheit Tn, während der Bewegung der Transporteinheit Tn entlang der Transportstrecke 2, wurde bislang vermieden, weil die praktische Realisierung im Vergleich zu einer Veränderung des Spulenstroms der Antriebsspulen 7 relativ aufwändig ist.

In Fig. 2a ist eine erste Ausführungsform der Erfindung dargestellt. Dabei sind die Antriebsmagnete 4 der Transporteinheit Tn vorzugsweise auf einer Trägerplatte 6 angeordnet, welche über zumindest ein erstes Stellglied 9, vorzugsweise über mehrere erste Stellglieder 9, mit dem Grundkörper 3 der Transporteinheit Tn verbunden ist. Vorzugsweise ist die Trägerplatte 6 aus einem festen, ferromagnetischen Material ausgeführt, wie z.B. Eisen, um das magnetische Feld gezielt zu führen. Hierbei kann für jeden Antriebsmagnet 4 auch ein eigenes erstes Stellglied 9, oder auch mehrere erste Stellglieder 9, vorgesehen sein, oder es kann ein erstes Stellglied 9, oder auch mehrere erste Stellglieder 9, für mehrere Antriebsmagnete 4 vorgesehen sein. Die Zuordnung von einem ersten Stellglied 9 zu einem Antriebsmagnet 4 ist allerdings unerheblich. Wichtig ist, dass zumindest ein Antriebsmagnet 4 durch zumindest ein erstes Stellglied 9 in zumindest einem der sechs möglichen Bewegungsfreiheitsgrade bewegt werden kann. Auf die Trägerplatte 6 kann aber auch verzichtet werden, wenn das zumindest eine erste Stellglied 9 direkt auf den zumindest einen Antriebsmagneten 4 wirkt. Das Stellglied 9 ermöglicht in der dargestellten Ausgestaltung die Bewegung zumindest eines Antriebsmagnetes 4, beispielsweise über die Trägerplatte 6, in Querrichtung y (normal auf die Bewegungsrichtung x der Transporteinheit Tn entlang der Transportstrecke) relativ zum Grundkörper 3 der Transporteinheit Tn. Aufgrund der konstruktiv vorgegebenen Führung der Transporteinheit Tn an der Transportstrecke 2 bzw. an einem Transportsegment TSk in Querrichtung y, die eine Querverschiebung der Transporteinheit Tn in Querrichtung y verhindert, wird durch eine solche Bewegung der Antriebsmagnete 4 in Querrichtung y der Luftspaltabstand L des Luftspaltes 20 verändert.

Das zumindest eine erste Stellglied 9 wird von einer Ansteuereinheit A angesteuert. Auf diese Weise ist es möglich, mittels des zumindest einen ersten Stellglieds 9 den Luftspaltabstand L des Luftspalts 20 im Bereich zumindest eines Antriebsmagneten 4, vorzugsweise aller Antriebsmagnete 4, während der Bewegung der Transporteinheit Tn entlang der Transportstrecke zu verändern.

Durch Verändern des Luftspaltabstandes L kann natürlich unmittelbar auf den magnetischen Widerstand Rm des magnetischen Kreises 21 und damit auch auf den sich einstellenden magnetischen Fluss ψ eingewirkt werden.

Der zumindest eine Antriebsmagnet 4 kann mit dem ersten Stellglied 9 aber auch zur Verstellung des magnetischen Widerstandes Rm grundsätzlich beliebig in seiner Position auf der Transporteinheit Tn verändert werden. Wird die Position des zumindest einen Antriebsmagneten 4 durch Verschieben und/oder Verdrehen in zumindest einem Bewegungsfreiheitsgrad geändert, so verändert sich, neben einer möglichen Veränderung des Luftspaltes 20, der magnetische Pfad des magnetischen Kreises 21 und damit auch der magnetische Widerstand Rm und der magnetische Flusses ψ im magnetischen Kreis 21. Wird z.B. ein Antriebsmagnet 4 um 90° gedreht hat das unmittelbare Auswirkung auf den magnetischen Pfad und damit auf den magnetischen Flusses ψ im magnetischen Kreis 21.

Das zumindest eine erste Stellglied 9 wird vorzugsweise so ausgeführt, dass es innerhalb kurzer Zeit, beispielsweise innerhalb von wenigen Millisekunden, ausreichend hohe Kräfte und Wege zum Bewegen der Antriebsmagnete 4, aufbringen kann. Idealerweise kann beispielsweise der Luftspaltabstand L und folglich der magnetische Widerstand Rm innerhalb eines Zeitschrittes der Regelung der Antriebsspulen 7 verändert werden. Der Zeitschritt der Regelung definiert, wie oft eine neue Stellgröße (z.B. eine neue Spulenspannung) von der Regelungseinheit 10 vorgegeben und an die Antriebsspulen 7 angelegt wird. Zusätzlich sollte das erste Stellglied 9 zur Verstellung des Luftspaltabstandes L des Luftspaltes 20 bzw. zur Verstellung des magnetischen Widerstands Rm des magnetischen Kreises 21 einen niedrigen Energiebedarf aufweisen. Vorzugsweise ist das erste Stellglied 9 durch einen ausreichend schnellen Piezoaktuator ausgebildet, es wären aber auch andere Ausführungen denkbar, die ähnliche Eigenschaften wie ein Piezoaktuator aufweisen. Zur Energieversorgung des zumindest einen ersten Stellglieds 9 sowie der Ansteuereinheit A kann eine Energiequelle 11 wie z.B. eine Batterie an der Transporteinheit Tn angeordnet sein. Die Energie könnte aber auch anders bereitgestellt werden, z.B. durch induktive Energieübertragung vom Langstator oder einem anderen Bauteil der Transportstrecke, die auch zum Laden einer Energiequelle 11 dienen könnte. Wichtig ist jedenfalls, dass die Transporteinheit Tn bzw. das zumindest eine erste Stellglied 9 zu jeder Zeit während des Betriebs mit ausreichend Energie zur Verstellung des zumindest einen Antriebsmagnets 4 versorgt wird. Die Ansteuereinheit A kann zur Verstellung des Luftspaltabstandes L auch Befehle von einer anderen Einrichtung des Langstatorlinearmotors 1 erhalten, beispielsweise von der Regelungseinheit 10 oder es kann eine separate Regelungseinheit 14 an der Transporteinheit Tn angeordnet sein..

Bisher wurde im Stand der Technik ein fixer, konstanter Luftspalt zwischen ortsfest an einer Transporteinheit Tn angeordneten Antriebsmagneten 4 und ortsfest angeordneten Antriebsspulen 7 eines Langstators vorgesehen. Diese Anordnung hat allerdings den Nachteil, dass sich insbesondere bei langen Transporteinheiten Tn auf stark gekrümmten Transportstrecken, unterschiedliche Abstände L zwischen den einzelnen Antriebsmagneten 4 der Transporteinheit Tn und den Antriebsspulen 7 des Langstators des Langstatorlinearmotor ergeben. Diese unterschiedlichen Abstände L führen bei Bewegung der Transporteinheit Tn entlang der gekrümmten Transportstrecke 2 zu größeren Flussschwankungen und erfordern größere Regeleingriffe an den Antriebsspulen 7 durch die Regelungseinheit 10, um die gewünschte Vortriebskraft Fv aufrecht zu erhalten.

Fig. 2b zeigt eine solche Ausführungsform der Erfindung anhand einer Draufsicht der Transporteinrichtung 1 im Bereich eines gekrümmten Streckenabschnitts einer Transportstrecke 2. Im Unterschied zur bisher beschriebenen Ausführungsform gemäß Fig. 2a ist hier keine Trägerplatte 6 zwischen dem zumindest einen ersten Stellglied 9 und den Antriebsmagneten 4 vorgesehen, sondern die Positionen einzelner Antriebsmagnete 4i können hier individuell mittels korrespondierender erster Stellglieder 9j in jeweils einem Bewegungsfreiheitsgrad verändert werden, hier in Querrichtung y. Es wäre aber natürlich auch denkbar, die Positionen der Antriebsmagnete 4i in mehreren Bewegungsfreiheitsgraden zu bewegen, z.B. eine Bewegung in Querrichtung Y und eine Verdrehung um die Y-Achse oder andere Kombinationen der sechs möglichen Bewegungsfreiheitsgrade. Zur Veränderung des magnetischen Widerstandes Rm des magnetischen Kreises 21 wird im in Fig.2b dargestellten Ausführungsbeispiel jeweils nur der Abstand Li zwischen dem entsprechenden Antriebsmagnet 4i der Transporteinheit Tn und den damit zusammenwirkenden Antriebsspulen 7 des Langstators verstellt. Dadurch ist es auch bei Kurvenfahrt, d.h. in einem gekrümmten Abschnitt einer Transportstrecke möglich, einen annähernd konstanten Luftspaltabstand Li zwischen einzelnen Antriebsmagneten 4i und den damit zusammenwirkenden Antriebsspulen 7 einzustellen, d.h. über die gesamte Länge der Transporteinheit Tn.

Vorzugsweise sind dazu jedem Antriebsmagnet 4i der Transporteinheit Tn zur Veränderung des magnetischen Widerstandes Rm des magnetischen Kreises 21 ein erstes Stellglied 9j zugeordnet sein, sodass jeder Antriebsmagnet 4i in seiner Position individuell verstellt werden kann, wie in Fig. 2b dargestellt ist (Die Indizes i, j stehen hierbei für die Anzahl der angeordneten Antriebsmagneten 4 bzw. ersten Stellglieder 9). Es könnte aber auch ausreichend sein, nicht alle, sondern nur bestimmte Antriebsmagnete 4i zu verstellen, beispielsweise den in Bewegungsrichtung x gesehenen ersten und letzten Antriebsmagnet 4i.

In der Ausführungsform gemäß Fig. 2c ist die Position zumindest eines Antriebsmagneten 4i in einem zweiten Bewegungsfreiheitsgrad (hier ein Winkel αi um die z-Achse) veränderbar. Es kann also nicht nur der Luftspaltabstand Li zwischen zumindest einem Antriebsmagnet 4i der Transporteinheit Tn und zumindest einer damit zusammenwirkenden Antriebsspule 7 der Transportstrecke 2 mittels zumindest eines korrespondierenden ersten Stellglieds 9j individuell verstellt werden, sondern zusätzlich der Winkel αi der Transporteinheit Tn zwischen dem zumindest einen Antriebsmagnet 4i und der zumindest einen damit zusammenwirkenden Antriebsspule 7 der Transportstrecke 2. Vorteilhafterweise werden jedoch mehrere Antriebsmagneten 4i mittels mehrerer korrespondierender erster Stellglieder 9j verstellt, wodurch z.B. ein annähernd gleichmäßiger Luftspaltabstand L über die gesamte Länge der Transporteinheit Tn erreicht werden kann, wie in Fig.2c dargestellt.

Natürlich wäre es auch denkbar, z.B. nur den ersten und den letzten Antriebsmagneten 4i der Transporteinheit Tn mittels korrespondierender erster Stellglieder 9j zu verstellen und die dazwischenliegenden Antriebsmagneten 4i auf einer gemeinsamen mittels eines oder mehrerer erster Stellglieder 9j verstellbaren Trägerplatte 6 analog dem Ausführungsbeispiel gemäß Fig. 2a anzuordnen. Auch wäre denkbar jeden einzelnen Antriebsmagneten 4i verstellbar auszuführen (z.B. in Fig. 2b Antriebsmagnete 4i mittels Stellglieder 9i) oder die Antriebsmagnete 4i z.B. jeweils paarweise auf einer kleineren Trägerplatte 6 anzuordnen, welche mittels eines oder mehrerer erster Stellglieder 9j verstellbar sein kann. Prinzipiell sind viele solcher Ausführungsformen vorstellbar und es kann je nach Art und Ausführung der Transporteinheit Tn sowie der Transportstrecke eine Ausführungsform der Erfindung gewählt werden, beispielsweise in Abhängigkeit der Länge der Transporteinheit Tn, der Anzahl der Antriebsmagneten 4i der Transporteinheit Tn oder der Krümmung der Transportstrecke. Natürlich ist die Veränderung der Position nicht auf die genannten Beispiele beschränkt, es wären auch beliebige andere Kombinationen von Bewegungsfreiheitsgraden denkbar, um die Antriebsmagnete 4i in ihren Positionen zu verstellen und dadurch gezielt den magnetischen Widerstand Rm und folglich den magnetischen Fluss ψ des magnetischen Kreises 21 zu beeinflussen.

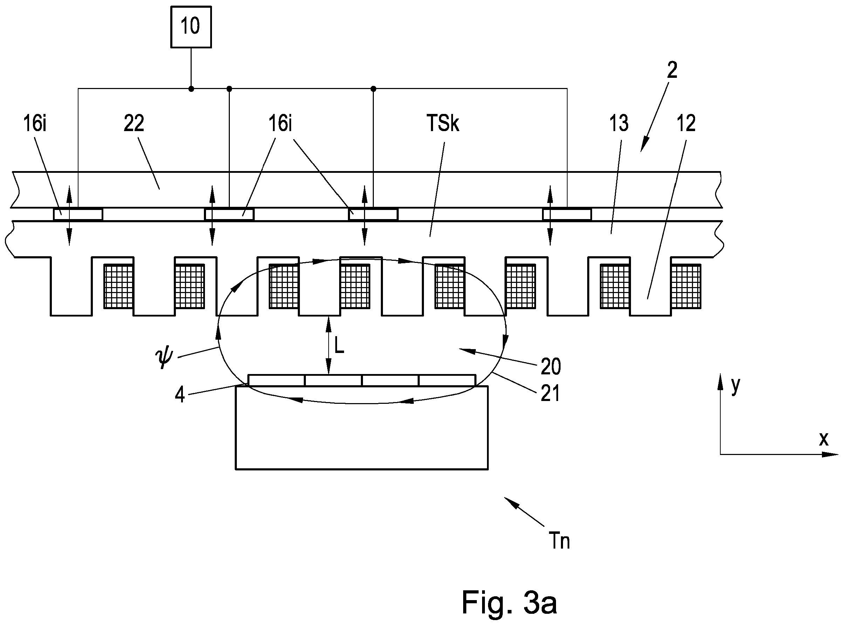

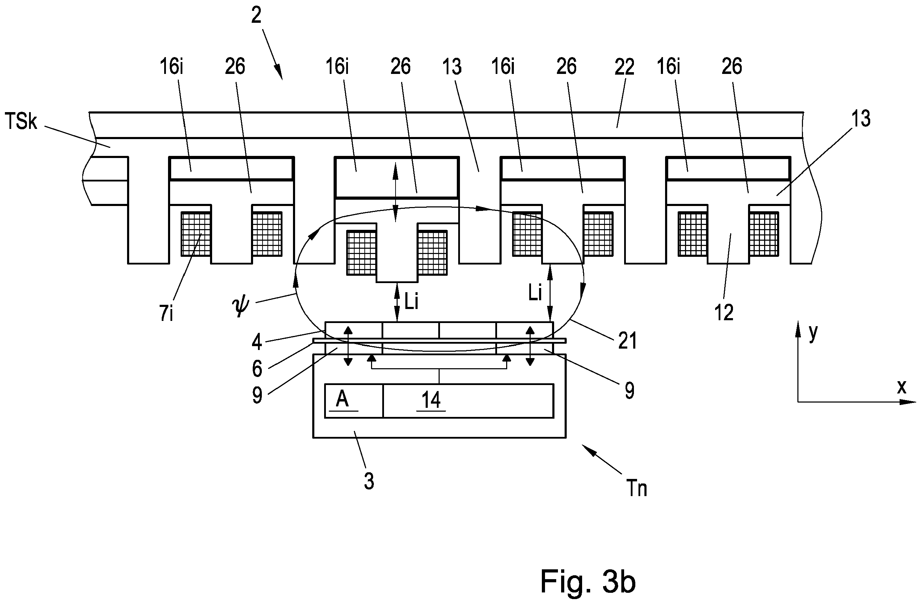

Gemäß einer weiteren Ausgestaltung der Erfindung kann zur Veränderung des magnetischen Widerstands Rm des magnetischen Kreises 21 die Position zumindest einer Antriebsspule 7 der Transportstrecke 2 mittels zumindest eines an der Transportstrecke 2 angeordneten und mit der zumindest einen Antriebsspule 7 der Transportstrecke 2 zusammenwirkenden zweiten Stellglieds 16, 17 in zumindest einem Bewegungsfreiheitsgrad verändert werden wie nachfolgend anhand der Figuren 3a und 3b beschrieben wird.

In Fig. 3a ist eine Draufsicht einer Transporteinheit Tn an einem geraden Streckenabschnitt einer Transportstrecke 2 dargestellt. Dabei sind zur Veränderung des Luftspaltabstandes L (und folglich des magnetischen Widerstandes Rm des magnetischen Kreises 21) zwischen den Antriebsmagneten 4 der Transporteinheit Tn und den damit zusammenwirkenden Antriebsspulen 7 der Transportstrecke 2 bzw. eines Transportsegments TSk, vorzugsweise mehrere zweite Stellglieder 16i an der Transportstrecke 2 angeordnet. Beispielsweise können die zweiten Stellglieder 16i zwischen der stationären Stützkonstruktion 22 der Transportstrecke 2 und einem Transportsegment TSk angeordnet und z.B. von der Regelungseinheit 10 angesteuert werden. Analog der ersten Stellglieder 9i können die zweiten Stellglieder 16i z.B. als Piezoaktuatoren oder andere geeignete Aktuatoren ausgestaltet sein. Die zweiten Stellglieder 16i werden, vorzugsweise von der Regelungseinheit 10, so angesteuert, dass während der Bewegung der Transporteinheit Tn entlang der Transportstrecke 2 beispielsweise ein Transportsegment TSk mit daran angeordneten Antriebsspulen 7 in Querrichtung Y verstellt werden kann. Dadurch wird der Luftspaltabstand L zwischen den Antriebsmagneten 4 und den Antriebsspulen 7 des Transportsegments TSk verändert, wodurch der magnetische Widerstand Rm und folglich der magnetische Fluss ψ des magnetischen Kreises 21 gezielt beeinflusst werden kann. Natürlich wäre auch eine Kombination mit der Positionsverstellung der Antriebsmagnete 4 der Transporteinheit Tn (wie anhand von Fig.2a-2c beschrieben) denkbar, beispielsweise um die Wirkung der Veränderung des magnetischen Widerstands Rm zu verstärken oder wenn die realisierbaren Wege bzw. Hübe der ersten und/oder zweiten Stellglieder 9i, 16i beschränkt sind.

In Fig. 3b ist eine weitere Ausführungsform dargestellt, wobei die zweiten Stellglieder 16i an beweglichen Spulensegmenten 26 eines Transportsegments TSk angeordnet sind, wodurch die Positionen der Antriebsspulen 7i inkl. eines Teils des ferromagnetischen Kerns 13, insbesondere der Zähne 12 des Kerns 13 individuell in zumindest einem Bewegungsfreiheitsgrad verstellt werden können, vorzugsweise in Querrichtung Y. Die konkrete Ausgestaltung der Spulensegmente 26 ist dabei nicht entscheidend, z.B. wäre es denkbar, die Spulensegmente 26 mittels geeigneter Führungen am Transportsegment TSk beweglich anzuordnen, sodass die Spulensegmente 26 mittels der zweiten Stellglieder 16i in ihrer Position verändert werden können. Durch die Verstellung der Spulensegmente 26 und der daran angeordneten Antriebsspulen 7i in Y-Richtung kann (ähnlich den Ausgestaltungen gemäß Fig. 2b, 2c) der Luftspaltabstand Li zwischen einzelnen Antriebsspulen 7i und damit zusammenwirkenden Antriebsmagneten 4i individuell eingestellt werden, was direkten Einfluss auf den magnetischen Widerstand Rm des magnetischen Kreises 21 und folglich auf den magnetischen Fluss ψ hat. Auch hier sind die zweiten Stellglieder 16i vorzugsweise durch Piezoaktuatoren oder andere geeignete Stellglieder ausgestaltet, die beispielsweise von der Regelungseinheit 10 (in Fig. 3b nicht dargestellt) angesteuert werden können. Natürlich ist auch z.B. eine Kombination mit verstellbaren Antriebsmagneten 4i gemäß einer der beschriebenen Varianten möglich. In Fig. 3b ist z.B. die Variante analog der anhand Fig. 2a beschriebenen Ausführungsform dargestellt, wobei Antriebsmagnete 4 der Transporteinheit Tn auf einer gemeinsamen, in Y-Richtung verstellbaren, Trägerplatte 6 angeordnet sind. Die Trägerplatte 6 wird von der Regelungseinheit 14 der Ansteuereinheit A mittels erster Stellglieder 9 so angesteuert, dass die Antriebsmagnete 4 in Y-Richtung bewegbar sind, wodurch der magnetische Widerstand Rm des magnetischen Kreises 21 verändert werden kann und folglich der magnetische Fluss ψ.

Prinzipiell ist die genaue konstruktive Ausgestaltung der Verstellung der Position einer Antriebsspule 7i und/oder eines Antriebsmagnetes 4i für die Erfindung nicht maßgebend, wichtig ist nur, dass die Position zumindest einer, vorzugsweise mehrerer Antriebsspulen 7i in zumindest einem Bewegungsfreiheitsgrad veränderbar ist, sodass der magnetische Widerstand Rm des magnetischen Kreises 21 veränderbar ist. Hierfür gibt es natürlich viele Möglichkeiten, um das zu realisieren.

Aus Gründen der einfacheren Darstellung wurden die Ausführungsbeispiele anhand einer einseitigen Ausführung der Transportstrecke 2 beschrieben, natürlich ist von der Erfindung aber auch eine beidseitige Ausführungsform umfasst, bei der an in Bewegungsrichtung x gesehen beiden Seiten der Transporteinheit Tn Antriebsmagnete 4i, 5i und Transportsegmente TSk, TSm mit Antriebsspulen 7i, 8i vorgesehen sind. Es könnte also sowohl die Transporteinheit Tn an beiden Seiten mittels erster Stellglieder 9i, 10i verstellbare Antriebsmagnete 4i, 5i aufweisen, als auch die Transportstrecke 2 an beidseitig der Transporteinheit Tn angeordneten Transportsegmenten TSk, TSm mittels zweiter Stellglieder 16i, 17i verstellbare Antriebsspulen 7i, 8i aufweisen (Transportsegment TSm und zweite Stellglieder 17i sind in den Fig. 3 und 3b nicht dargestellt, die Ausgestaltung ist analog des Transportsegments TSk bzw. der zweiten Stellglieder 16i). Auch Kombinationen wären natürlich denkbar.

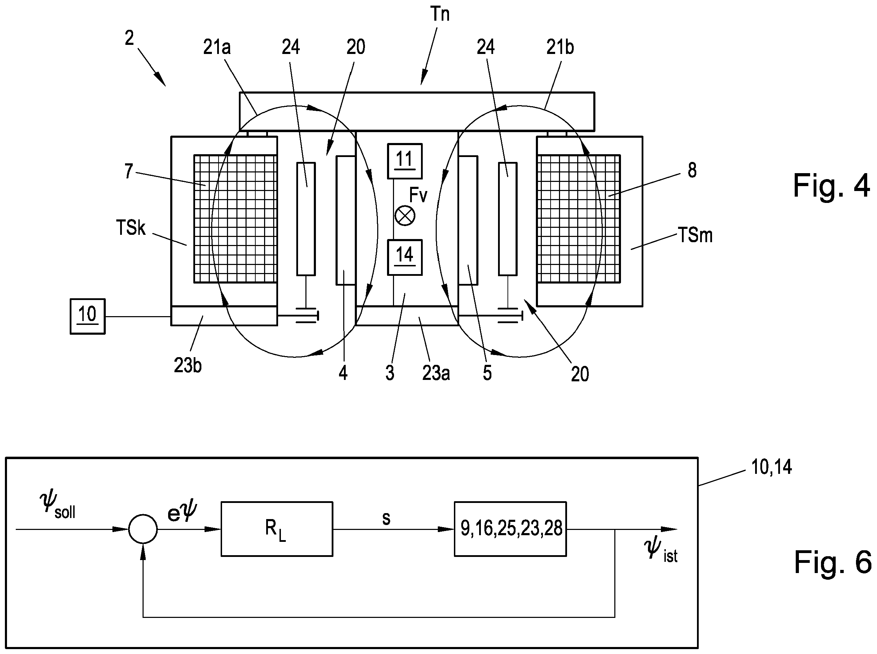

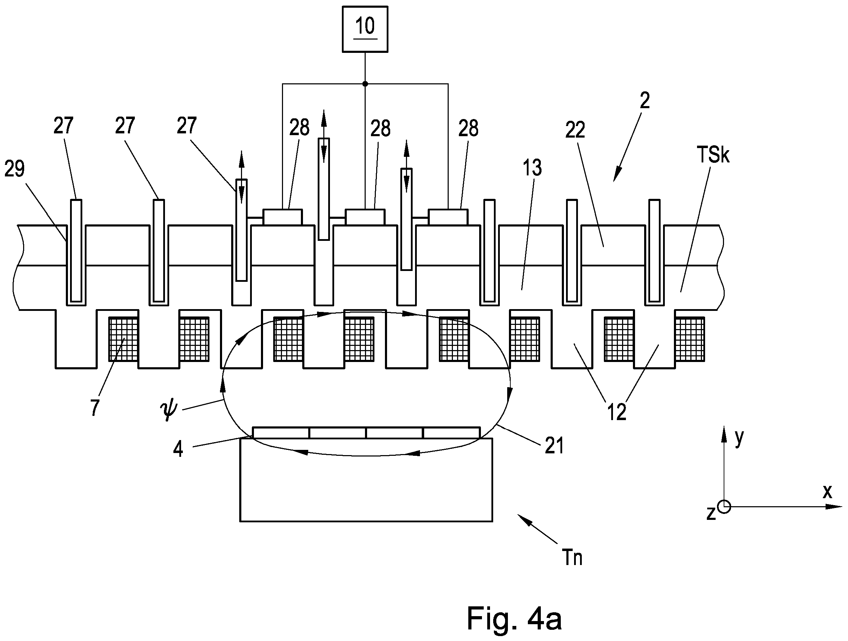

Eine weitere Ausgestaltung der Erfindung ist in Fig. 4 anhand eines Querschnitts durch eine Transporteinheit Tn im Bereich einer beidseitigen Transportstrecke 2 dargestellt. Die Transporteinheit Tn weist an beiden Seiten Antriebsmagnete 4, 5 auf und die Transportstrecke 2 weist an beiden Seiten Transportsegmente TSk, TSm auf, an welchen Antriebsspulen 7, 8 angeordnet sind, die bekanntermaßen mit den Antriebsmagneten 4, 5 an der entsprechenden Seite der Transporteinheit Tn zur Erzeugung einer Vortriebskraft Fv zusammenwirken. Erfindungsgemäß ist zur Veränderung des jeweiligen magnetischen Widerstands Rm der magnetischen Kreise 21a, 21b der beiden Seiten, zumindest ein magnetisches Widerstandselement 24 vorgesehen, das mittels eines an der Transporteinheit Tn oder an der Transportstrecke 2 angeordneten dritten Stellglieds 23a, 23b zwischen Antriebsmagneten 4, 5 und Antriebsspulen 7, 8 eingebracht werden. Das Widerstandselement 24 ist vorzugsweise so ausgeführt, dass es eine bestimmte magnetische Permeabilität μ zur Beeinflussung des magnetischen Widerstands Rm des entsprechenden magnetischen Kreises 21a, 21b aufweist. Je nach gewünschter Ausführungsform kann das Material des magnetischen Widerstandselements 24 so gewählt werden, dass sich der magnetische Widerstand Rm des entsprechenden magnetischen Kreises 21a, 21b erhöht oder verringert. Wie in Fig. 4 ersichtlich, kann das zumindest eine dritte Stellglied 23a, 23b entweder an der Transporteinheit Tn (Stellglied 23a) oder an der Transportstrecke 2 (Stellglied 23b) angeordnet sein. Beispielsweise könnte das zumindest eine dritte Stellglied 23 wiederum als Piezoaktuator oder anderes geeignetes Stellglied ausgeführt sein. Ein an der Transportstrecke 2 angeordnetes drittes Stellglied 23b könnte z.B. von der Regelungseinheit 10 angesteuert werden und ein an der Transporteinheit Tn angeordnetes Stellglied 23a könnte z.B. von der Regelungseinheit 14 angesteuert werden. Je nach konkreter Ausgestaltung wäre es denkbar, das magnetische Widerstandselement 24 z.B. in den Luftspalt 20 mittels eines geeigneten Mechanismus einzuschwenken, einzuschieben oder in anderer geeigneter Weise in den Luftspalt 20 einzubringen. Die genaue Ausführungsform ist für die Erfindung aber nicht entscheidend, wichtig ist, dass das magnetische Widerstandselement 24 in ausreichend kurzer Zeit in den Luftspalt 20 eingebracht werden kann, sodass sich der magnetische Widerstand Rm des magnetischen Kreises 21a, 21b gezielt verändern lässt und folglich der magnetische Fluss ψ im magnetischen Kreis 21a, 21b. Selbstverständlich kann ein solches Widerstandselement 24 auch bei einer einseitigen Anordnung, wie in Fig.2a oder Fig.3a verwendet werden.

Eine weitere Ausgestaltung der Erfindung ist in Fig. 4a dargestellt. Zur Veränderung des magnetischen Widerstandes Rm des magnetischen Kreises 21 ist erfindungsgemäß vorgesehen, dass an der Transportstrecke 2 Öffnungen 29 vorgesehen sind, in welche magnetische Widerstandselemente 27 einbringbar sind. Dazu sind an der Transportstrecke 2 vierte Stellglieder 28 angeordnet, mit denen die magnetischen Widerstandselemente 27 zur Veränderung des magnetischen Widerstandes Rm des magnetischen Kreises 21 in die Öffnung 29 hinein und aus der Öffnung 29 heraus bewegt werden können, wie durch den Doppelpfeil in Fig. 4a symbolisiert ist. Die Öffnung 29 kann dabei, wie in Fig. 4a dargestellt, so ausgeführt sein, dass sie sich an der Transportstrecke 2 in Querrichtung, also in Y-Richtung durch die Stützkonstruktion 22 hindurch und in den ferromagnetischen Kern 13 des Transportsegments TSk erstreckt. Wichtig dabei ist, dass sich die Öffnung 29 bis in den Kern 13 erstreckt (bzw. in den Bereich, in dem sich der magnetische Kreis 21 ausbildet), sodass das magnetische Widerstandselement 27 beim Hinein- oder Herausbewegen in bzw. aus der Öffnung 29 den magnetischen Widerstand Rm des magnetischen Kreises 21 beeinflussen kann, der sich im Kern 13 ausbreitet. Die Darstellung in Fig. 4a ist natürlich nur beispielhaft zu verstehen, es könnten auch mehr oder weniger Öffnungen 19, magnetische Widerstandselemente 27 und vierte Stellglieder 28 angeordnet sein. Auch die Größe und Form der Öffnungen 29 und magnetischen Widerstandselemente 27 ist beliebig wählbar. Zur Verstärkung der Beeinflussung des magnetischen Kreises 21 wäre es z.B. auch denkbar, dass sich die Öffnungen 29 bis in die Zähne 12 des Kerns 13 und erstrecken. Die magnetischen Widerstandselemente 27 und die vierten Stellglieder sind im Falle sich in Y-Richtung erstreckender Öffnungen 29 dann natürlich so ausgeführt, dass die magnetischen Widerstandselemente 27 in Y-Richtung bewegbar sind. Je nach gewünschter Ausführungsform kann das Material, also im Wesentlichen die magnetische Permeabilität μ des magnetischen Widerstandselements 27 so gewählt werden, dass sich der magnetische Widerstand Rm des magnetischen Kreises 21 beim Einbringen des magnetischen Widerstandselements 27 erhöht oder verringert. Das an der Transportstrecke 2 angeordnete vierte Stellglied 28 könnte z.B. von der Regelungseinheit 10 angesteuert werden. Es wäre aber auch denkbar, dass die Öffnungen 29 so an der Transportstrecke 2 angeordnet werden, dass sie sich nicht in Y-Richtung erstrecken, sondern in Z-Richtung, und dass das magnetische Widerstandselement 27 entsprechend in Z-Richtung verschiebbar angeordnet ist. Die genaue Ausführungsform ist für die Erfindung aber nicht entscheidend, wichtig ist, dass das magnetische Widerstandselement 27 mittels eines geeigneten Mechanismus durch Einschwenken, Einschieben oder in anderer geeigneter Weise in ausreichend kurzer Zeit in die Öffnung 29 eingebracht werden kann, sodass sich der magnetische Widerstand Rm des magnetischen Kreises 21 gezielt verändern lässt und folglich der magnetische Fluss ψ im magnetischen Kreis 21.

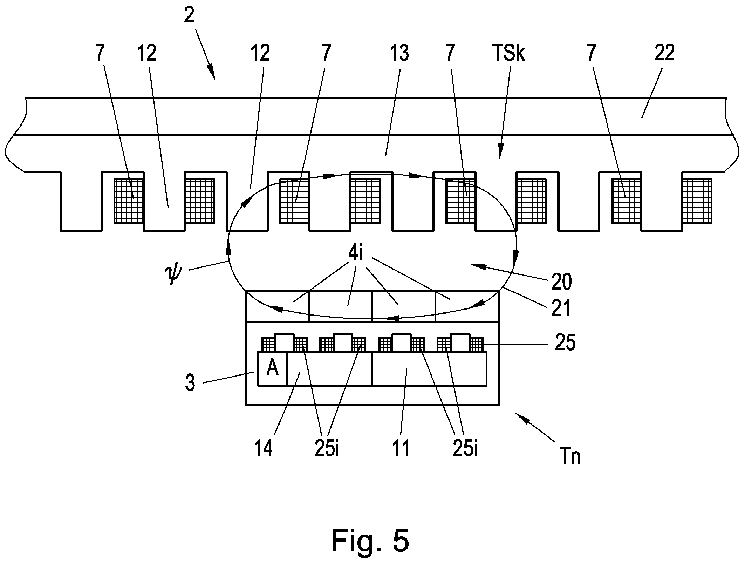

Eine weitere Ausgestaltung der Erfindung ist in Fig. 5 anhand einer Draufsicht einer Transporteinheit Tn an einem Streckenabschnitt einer Transportstrecke 2 dargestellt. Im Gegensatz zu den bisher beschrieben Ausführungsformen wird nun nicht der magnetische Widerstand Rm des magnetischen Kreises 21 verändert, sondern die an der Transporteinheit Tn erzeugte magnetische Spannung Um. Zur Veränderung der magnetischen Spannung Um an der Transporteinheit Tn ist zumindest eine Zusatzspule 25 an der Transporteinheit Tn angeordnet, wobei an die Zusatzspule 25 zur zumindest zeitweisen Erhöhung oder Verringerung der magnetischen Spannung Um an der Transporteinheit Tn zumindest zeitweise eine elektrische Zusatzspannung Uz angelegt werden kann, wodurch eine, der magnetischen Spannung Um der Antriebsmagnete 4i gleich- oder entgegengerichtete, magnetische Zusatzspannung Umz erzeugt wird, wodurch ein zusätzlicher magnetischer Fluss $\psi z$ erzeugt werden kann, der den magnetischen Fluss $\psi$ des magnetischen Kreises 21 erhöht oder verringert. Vorzugsweise werden mehrere Zusatzspulen 25i an der Transporteinheit angeordnet, beispielsweise eine Zusatzspule 25i je Antriebsmagnet 4i. Die Zusatzspulen 25i können z.B. von der an der Transporteinheit Tn angeordneten Energiequelle 11 mit der Zusatzspannung Uz versorgt werden und von der Regelungseinheit 14 der Ansteuereinheit A der Transporteinheit Tn angesteuert werden. Durch das zumindest zeitweise Anlegen der Zusatzspannung Uz wird eine magnetische Zusatzspannung Umz von den Zusatzspulen 25i erzeugt, die der magnetischen Spannung Um der Antriebsmagnete 4i überlagert wird. Gemäß der Beziehung Um = Rm * $\psi$ kann auch dadurch der magnetische Fluss $\psi$ des magnetischen Kreises 21 gezielt verändert bzw. erhöht werden.

Erfindungsgemäß können die bisher beschriebenen Verfahren zur Veränderung des magnetischen Flusses $\psi$ des magnetischen Kreises 21 besonders vorteilhaft dazu verwendet werden, Führungsungenauigkeiten einer Transportstrecke 2 auszugleichen, die maximal erzielbare Geschwindigkeit $V_{max}$ einer Transporteinheit Tn zu erhöhen oder eine Übergabe einer Transporteinheit Tn in einer Übergabeposition U einer beidseitigen Transportstrecke 2 zu realisieren, wie nachfolgend näher erläutert wird.

Gemäß einer ersten Verwendung eines der beschriebenen erfindungsgemäßen Verfahren ist vorgesehen, dass ein magnetischer Ist-Fluss $\psi_{ist}$ im magnetischen Kreis 21 ermittelt wird und dass eine Regelungseinheit 10, 14 den magnetischen Ist-Fluss $\psi_{ist}$ auf einen definierten magnetischen Soll-Fluss $\psi_{soll}$ regelt, indem der magnetische Widerstand Rm und/oder die magnetische Spannung Um an der Transporteinheit Tn von der Regelungseinheit 10, 14 verändert wird. "Regeln" bedeutet in diesem Zusammenhang aber nicht zwangsläufig eine "closed-loop" Regelung mit einer Rückkopplung eines ermittelten magnetischen Ist-Flusses $\psi_{ist}$ (oder eine physikalisch äquivalenten Größe), sondern es wäre auch ein gesteuerter "o-pen-loop" Betrieb denkbar. Beispielsweise könnten dazu Kennlinien z.B. eines magnetischen Soll-Flusses $\psi_{soll}$ in der Regelungseinheit 10, 14 hinterlegt sein, wobei die Regelungseinheit 10, 14 die vorhandenen Stellglieder 9, 16, 23 entsprechend der Kennlinien ansteuert. Der magnetischen Ist-Fluss $\psi_{ist}$ kann in bekannter Weise gemessen werden, oder kann in einem Beobachter aus verfügbaren Messgrößen geschätzt werden. Wie bereits ausführlich beschrieben wurde, kann der magnetische Fluss $\psi$ des magnetischen Kreises 21 auf verschiedene Weise verändert werden, beispielsweise durch Positionsänderung der Antriebsmagnete 4, 5 der Transporteinheit Tn, durch Positionsänderung der Antriebsspulen 7, 8 der Transportstrecke 2, durch Einführen eines magnetischen Widerstandselements 24 in den Luftspalt 20, durch Einführen eines magnetischen Widerstandselements 27 in eine Öffnung 19 der Transportstrecke 2 oder durch Verändern der magnetischen Spannung Um an der Transporteinheit Tn. Bei geraden oder wenig stark gekrümmten Transportstrecken 2 kann es ausreichend sein, z.B. die Antriebsmagnete 4 auf einer gemeinsamen Trägerplatte 6 anzuordnen und die Trägerplatte 6 mittels zumindest eines ersten Stellglieds 9 in Y-Richtung zu verstellen, um den Luftspaltabstand L im Luftspalt 20 und damit den magnetischen Widerstand Rm und folglich den magnetischen Fluss $\psi$ des magnetischen Kreises 21 zu verändern. Alternativ kann beispielsweise die Position zumindest einer Antriebsspule 7 der Transportstrecke 2 mittels zumindest eines zweiten Stellglieds 16 verändert werden, vorzugsweise in Y-Richtung. Bei stärker gekrümmten Transportstrecken ist es vorteilhaft, wenn zumindest der Luftspaltabstand Li einzelner Antriebsmagneten 4i individuell mittels zumindest eines ersten Stellglieds 9, vorzugsweise mehrerer erster Stellglieder 9j verstellbar ist. Zur zusätzlichen Erhöhung der Gleichmäßigkeit des Luftspalts 20 können einzelne Antriebsmagneten 4i aber auch winkelverstellbar ausgeführt sein, wobei der Winkel $\alpha_i$ im Luftspalt 20 zwischen den einzelne Antriebsmagneten 4i und den damit zusammenwirkenden Antriebsspulen 7 mittels zumindest eines ersten Stellgliedes 9, vorzugsweise mittels mehrerer erster Stellglieder 9j verstellt werden kann.

Um insbesondere in Kurven nicht von der Transportstrecke 2 zu fallen, können an einer Transporteinheit Tn Führungselemente (nicht dargestellt) angeordnet sein, die zur Führung der Transporteinheit Tn mit der Transportstrecke zusammenwirken, sich also z.B. darauf mittels geeigneter Führungselemente abstützen. Die Genauigkeit einer solchen Führung hängt von verschiedenen Einflussfaktoren ab, wie z.B. von Herstellungstoleranzen der einzelnen Komponenten, vom Verschleiß der Transportstrecke 2 und der Führungskomponenten, von der Wartung, etc. Beispielsweise kann es Bereiche der Transportstrecke 2 geben, die einen höheren Verschleiß aufweisen und Bereiche mit geringerem Verschleiß, z.B. aufgrund unterschiedlicher Belastungen und/oder Geschwindigkeiten der Transporteinheiten Tn. Auch die Transporteinheit Tn unterliegt natürlich einem Verschleiß, was dazu führen kann, dass sich das Spiel der mechanischen Führungselemente vergrößert. Ein Verschleiß an der Transporteinheit Tn und/oder an der Transportstrecke 2 kann z.B. dazu führen, dass sich die Größe des Luftspalts 20, also der Abstand L zwischen den Antriebsmagneten 4 der Transporteinheit Tn und den Antriebsspulen 7 des Langstators, bei Bewegung der Transporteinheit Tn entlang der Transportstrecke 2 ändert, was entsprechend zu unterschiedlich großen magnetischen Flüssen $\psi$ im magnetischen Kreis 21 führen würde. Unter der Annahme z.B. einer gewünschten konstanten Vortriebskraft Fv der Transporteinheit Tn müsste folglich die Spulenspannung der Antriebsspulen 7 zur Kompensation des schwankenden magnetischen Flusses $\psi$ durch den Regler (Regelungseinheit 10) der Bewegung der Transporteinheit Tn laufend angepasst werden, was aufgrund der benötigten Dynamik der Regelung (große Regeleingriff in kurzen Zeitschritten) die Anforderungen an die Regelung erhöhen würde. Mit der bereits ausführlich beschriebenen erfindungsgemäßen Veränderung des magnetischen Flusses $\psi$ ist es nun möglich, solche Führungsungenauigkeiten durch eine davon entkoppelte Regelung (Regelungseinheit 14 der Transporteinheit Tn oder eine zusätzliche Regelung in der Regelungseinheit 10) auszugleichen, indem der magnetische Fluss $\psi$ im magnetischen Kreis 21 unabhängig von der Regelung der Bewegung der Transporteinheit Tn geregelt wird, wie nachfolgend anhand Fig. 5 beschrieben wird.

In Fig. 6 ist ein Blockschaltbild der erfindungsgemäßen Regelungsstruktur abgebildet. Die Regelgröße ist der magnetische Ist-Fluss $\psi_{ist}$ des magnetischen Kreises 21 und die Führungsgröße ist der magnetische Soll-Fluss $\psi_{soll}$ des magnetischen Kreises 21. Der magnetische Ist-Fluss $\psi_{ist}$ kann beispielsweise mittels eines geeigneten Beobachters am Langstator oder durch Messung ermittelt werden. Zur Bildung eines Regelfehlers $e\psi$ wird der magnetische Ist-Fluss $\psi_{ist}$ mit dem magnetischen Soll-Fluss $\psi_{soll}$ verglichen. Der Regelfehler $e\psi$ wird (je nach Ausführungsform) entweder in der Regelungseinheit 10 der Transportstrecke 2 und/oder in der Regelungseinheit 14 der Transporteinheit Tn mittels eines geeigneten Reglers $R_L$, beispielsweise ein einfacher PID- oder PI-Regler oder ein beliebiger anderer Regler, ausgeregelt, in dem vom Regler $R_L$ eine Stellgröße s berechnet wird, die von dem zumindest einen ersten Stellglied 9 in eine Veränderung der Position des zugeordneten zumindest einen Antriebsmagneten 4 und/oder von dem zumindest einen zweiten Stellglied 16 in einer Veränderung der Position der zugeordneten zumindest einen Antriebsspule 7 und/oder von dem zumindest einen dritten Stellglied 23 in eine Bewegung des zumindest eines magnetischen Widerstandselements 24 und/oder von dem zumindest einen vierten Stellglied 28 in eine Bewegung des zumindest eines magnetischen Widerstandselements 27 und/oder in eine an der zumindest einen Zusatzspule 25 der Transporteinheit Tn anzulegenden Zusatzspannung Uz umgesetzt wird. Im Falle eines Piezo-Aktuators als Stellglied 9, 16, 23, 24 kann die Stellgröße s beispielsweise ein elektrisches Spannungssignal sein. Zur Einstellung einer gewünschten Regelcharakteristik wie z.B. Ansprechverhalten, Dynamik, Überschwingen, Dämpfung, können je nach Ausführung der (des) Regler(s) $R_L$ deren (dessen) Reglerparameter festgelegt oder vorgegeben werden. Die Regelungseinheit 10, 14 kann als Hardware z.B. als separates Bauteil ausgeführt sein oder auch als Software z.B. in einer Steuerungseinheit des Langstatorlinearmotors eingebunden sein. In den gezeigten Ausführungsbeispielen (Fig.2a-2c, Fig. 4) kann die Regelungseinheit 14 der Transporteinheit Tn z.B. in der Ansteuereinheit A der Transporteinheit Tn integriert sein. Der Regler $R_L$ ist hierbei üblicherweise als Software implementiert.

Zur Kompensation von Führungsungenauigkeiten der Transportstrecke 2 kann durch die Wahl eines bestimmten magnetischen Soll-Flusses $\psi_{soll}$ z.B. ein gewünschter, dem magnetischen Soll-Fluss $\psi_{soll}$ entsprechender konstanter Luftspalt 20 vorgegeben und eingeregelt werden.

Gemäß einer weiteren Verwendung eines der erfindungsgemäßen Verfahren zur Veränderung des magnetischen Flusses $\psi$ des magnetischen Kreises 21, kann auf einfache Weise die maximal erzielbare Geschwindigkeit $V_{max}$ der Transporteinheit Tn erhöht werden, wie nachfolgend beschrieben wird. Grundsätzlich ist die maximale erzielbare Geschwindigkeit $V_{max}$ einer Transporteinheit Tn durch die maximale an die Antriebsspule 7 anlegbare Spulenspannung limitiert. Die maximal anlegbare Spulenspannung wird im Wesentlichen durch die Leistungsfähigkeit der Leistungselektronikeinheiten der Antriebsspule 7 vorgegeben. Die Leistungselektronikeinheiten können in der Regelungseinheit 10 integriert sein, können aber auch separate Hardwarebauteile sein. Hierbei sind aus thermischen Gründen natürlich möglichst niedrige Spulenspannungen erwünscht.

Aufgrund des physikalischen Induktionsgesetztes wird durch das bewegte Magnetfeld des Antriebsmagneten 4 einer sich bewegenden Transporteinheit Tn in einer Antriebsspulen 7 des Langstators eine sogenannte EMK-Spannung $U_{EMK}$ (EMK=elektromotorische Kraft) induziert, welche der angelegten Spulenspannung an der Antriebsspule 7 entgegenwirkt und eine sogenannte Gegen-EMK erzeugt. Je höher die Geschwindigkeit der Transporteinheit Tn ist, desto höher ist die EMK-Spannung $U_{EMK}$ und damit die Gegen-EMK. Die maximale Geschwindigkeit $V_{max}$ der Transporteinheit Tn ist erreicht, wenn die induzierte EMK-Spannung $U_{EMK}$ betragsmäßig der angelegten Spulenspannung an der Antriebsspule 7 entspricht, weil dann die Antriebsspule 7 keinen weiteren Strom aufnehmen kann. Zwar könnte prinzipiell die angelegte Spulenspannung an der Antriebsspule 7 des Langstators erhöht werden, praktisch ist diese Spulenspannung aber durch eine vorgegebene maximale Spannung der Leistungselektronikeinheiten, aber auch durch thermische Beschränkungen, begrenzt. Generell ist die EMK-Spannung $U_{EMK}$ proportional der Geschwindigkeit V der Transporteinheit Tn und des magnetischen Flusses $\psi_p$ des Antriebsmagneten 4 und etwaig vorhandener Zusatzspulen 25, wie nachstehender Zusammenhang zeigt.

$$U_{EMK}\alpha V \cdot \Psi_p$$

Der magnetische Fluss $\psi_p$ bezieht sich in dem Zusammenhang auf den durch die Antriebsmagneten 4 erzeugten magnetischen Fluss $\psi_p$, sowie den zusätzlichen magnetischen Fluss einer oder mehrerer etwaig an der Transporteinheit Tn angeordneten Zusatzspule(n) 25, da sich nur dieser Fluss $\psi_p$ gegenüber den ortsfesten Antriebsspulen 7 mit der Geschwindigkeit V der Transporteinheit Tn bewegt und eine Spannung in den Antriebsspulen 7 induziert. Der weiter oben erwähnte magnetische Fluss $\psi$ im magnetischen Kreis 21 ist hingegen der, sich anhand der magnetischen Spannungsquellen (Antriebsmagnete 4, Antriebsspulen 7 und evtl. Zusatzspulen 25) ergebende magnetische Fluss.

Will man die maximal erzielbare Geschwindigkeit $V_{max}$ der Transporteinheit Tn aber trotzdem, zumindest zeitweise erhöhen, beispielsweise um eine Transporteinheit Tn möglichst schnell von einer Arbeitsstation eines Produktionsprozesses zur nächsten Arbeitsstation zu bewegen, ohne dabei aber die Spulenspannung zu erhöhen, wird erfindungsgemäß der magnetische Fluss $\psi$ des magnetischen Kreises 21 verringert, indem der magnetische Widerstand Rm und/oder die magnetische Spannung Um an der Transporteinheit Tn verändert wird. Dabei kann die Veränderung des magnetischen Widerstands Rm und/oder der magnetischen Spannung Um mit einer der bereits ausführlich beschriebenen Verfahren durchgeführt werden, es wäre aber auch denkbar mehrere der Verfahren zu kombinieren. Es wäre also denkbar, nur ein erstes Stellglied 9 (oder mehrere erste Stellglieder 9) an der Transporteinheit Tn anzuordnen, mit welchem der magnetische Widerstand Rm des magnetischen Kreises 21 durch eine Positionsveränderung der Antriebsmagnete 4 erhöht wird. Es könnte aber auch nur ein zweites Stellglied 16 (oder mehrere zweite Stellglieder 16) an der Transportstrecke 2 angeordnet werden, mit dem die Position zumindest einer Antriebsspule 7 der Transportstrecke 2 und dadurch der magnetische Widerstand Rm des magnetischen Kreises 21 erhöht werden kann. Es wäre auch denkbar den magnetischen Widerstand Rm mittels eines (oder mehrerer), aus dem Luftspalt 20 zwischen zumindest einem Antriebsmagnet 4 der Transporteinheit Tn und zumindest einer damit zusammenwirkenden Antriebsspule 7 der Transportstrecke 2 zu entfernenden magnetischen Widerstandselements 24 zu erhöhen (oder analog mittels statorseitigem Widerstandselement 27). Oder es könnte die magnetische Spannung Um an der Transporteinheit Tn verringert werden, indem eine, von einer an der Transporteinheit Tn angeordneten Zusatzspule 25 erzeugte und der magnetischen Spannung Um der Antriebsmagnete entgegen gerichtete magnetische Zusatzspannung Umz angelegt wird. Durch Erhöhung des magnetischen Widerstandes Rm des magnetischen Kreises 21 verringert sich, unter Annahme einer unveränderten Spulenspannung in den Antriebsspulen 7, nicht nur magnetische Fluss $\psi$ des magnetischen Kreises 21, sondern natürlich auch der vom Antriebsmagnet 4 bewirkte magnetische Fluss $\psi_p$ und damit auch die EMK-Spannung $U_{EMK}$. Damit kann aber als direkte Konsequenz die maximal erzielbare Geschwindigkeit $V_{max}$ der Transporteinheit Tn erhöht werden. Mit verringerter EMK-Spannung kann eine Antriebsspule 7 bei gleicher Geschwindigkeit V mehr Strom aufnehmen, was ermöglicht, die maximal erzielbare Geschwindigkeit $V_{max}$ der Transporteinheit Tn zu erhöhen. Das damit aber gleichzeitig die erzielbare Vortriebskraft $F_v$ reduziert wird, kann in Kauf genommen werden, da es nur um die Erhöhung der maximal erzielbaren Geschwindigkeit $V_{max}$ geht.

Üblicherweise werden in einer Transporteinrichtung 1 die Antriebsspulen 7, 8 eines Transportsegments TSk beispielsweise von einer Regelungseinheit 10 so geregelt, dass die mit den Antriebsspulen 7 des entsprechenden Transportsegments TSk zusammenwirkende Transporteinheit Tn durch die erzeugte Vortriebskraft $F_v$ in der gewünschten Weise (Position, Geschwindigkeit, Beschleunigung, Ruck) entlang des Transportsegments TSm bewegt wird. Beispielsweise kann dadurch eine konstante Geschwindigkeit V der Transporteinheit Tn unabhängig von der Beladung und Streckenführung eingeregelt werden. Wird bei gleichbleibender Spulenspannung an den Antriebsspulen 7 der magnetische Widerstand Rm vergrößert und/oder die magnetische Spannung Um verringert, um den magnetischen Fluss $\psi$ im magnetischen Kreis 21 zu verringern, so wird sich in Folge der sich dadurch ergebenden niedrigeren EMK-Spannung $U_{EMK}$ aber gleichzeitig auch die Geschwindigkeit V der Transporteinheit Tn erhöhen. Dieser Fall kann beispielsweise bei einer einfachen Feed-Forward Steuerung der Antriebsspulen 7 durch die Regelungseinheit 10 eintreten.

Im Normalfall wird in der Regelungseinheit 10 zur Regelung der Bewegung der Transporteinheit Tn aber eine Feedback Regelung implementiert sein. Hierbei wird z.B. eine Sollgeschwindigkeit der Transporteinheit Tn vorgegeben und von der Regelungseinheit 10 durch Vorgabe der Spulenspannungen der wirkenden Antriebsspulen 7 eingeregelt. Wird in diesem Fall der magnetische Widerstand Rm vergrößert und/oder die magnetische Spannung Um verringert, um den magnetischen Fluss $\psi$ im magnetischen Kreis 21 zu verringern, so wird die Regelungseinheit 10 nach wie vor dafür sorgen, dass die Sollgeschwindigkeit eingeregelt bleibt. Die Regelungseinheit 10 wird in diesem Fall daher die angelegten Spulenspannungen reduzieren, um der ansteigenden Geschwindigkeit V der Transporteinheit Tn entgegenzuwirken. In diesem Fall kann aber eine höhere Geschwindigkeit V der Transporteinheit Tn erreicht werden, indem die Sollgeschwindigkeit erhöht wird. Auf diese Weise kann das höhere Geschwindigkeitspotential trotzdem ausgenutzt werden.

In beiden Fällen wird es somit ermöglicht, dass auch die maximal erzielbare Geschwindigkeit $V_{max}$ der Transporteinheit Tn trotz der insbesondere durch die Leistungselektronik und thermische Grenzen begrenzte Spulenspannung erhöht werden kann. Damit ergibt sich bei unveränderten Leistungselektronikeinheiten ein größerer Geschwindigkeitsbereich für die Transporteinheit Tn, wodurch flexibler auf eine gewünschte Prozessführung reagiert werden kann. Die erfindungsgemäße Veränderung des magnetischen Widerstandes Rm des magnetischen Kreises 21 bzw. der magnetischen Spannung Um kann natürlich auch bei einer beidseitig ausgeführten Transportstrecke durchgeführt werden. Dazu sind beidseitig am Grundkörper 3 der Transporteinheit Tn Antriebsmagnete 4, 5 angeordnet, welche mit Antriebsmagneten 7, 8 der beidseitigen Transportstrecke zur Erzeugung einer Vortriebskraft Fv zusammenwirken. Dabei können die Antriebsmagnete 4, 5 mittels erster Stellglieder 9, 10, die Antriebsspulen 7, 8 mittels zweiter Stellglieder 16, 17, die magnetischen Widerstandselemente 24, 27 mittels dritter und vierter Stellglieder 23, 28 zur Veränderung des magnetischen Widerstands Rm verwendet werden und/oder die Zusatzspule 25 zur Veränderung der magnetischen Spannung Um an der Transporteinheit Tn verwendet werden, oder einer Kombination aus den Möglichkeiten. Es wäre aber auch denkbar, bei einer beidseitigen Ausführungsform z.B. nur den magnetischen Widerstand Rm des magnetischen Kreises 21a bzw. die magnetische Spannung Um auf einer Seite (der Seite der Antriebsmagnete 4) verstellbar auszuführen und den magnetischen Widerstand Rm des magnetischen Kreises 21b bzw. die magnetische Spannung Um auf der anderen Seite (der Seite der Antriebsmagnete 4) unveränderlich auszuführen.

Beispielsweise kann die Erhöhung der maximal erzielbaren Geschwindigkeit $V_{max}$ der Transporteinheit Tn mittels des in Fig.6 beschriebenen Regelverfahrens erzielt werden. Ebenfalls wieder unabhängig von der Regelung der Bewegung der Transporteinheit Tn. Dabei wird z.B. ein magnetischer Soll-Fluss $\psi_{soll}$ vorgegeben, der zu einem größeren Luftspalt 20 führt, wodurch ein größerer magnetischer Widerstand Rm und folglich geringerer magnetischer Fluss $\psi$ resultiert. Alternativ zur Veränderung des Luftspalts 20 kann wie beschrieben zur Veränderung des magnetischen Flusses $\psi$ z.B. auch ein magnetisches Widerstandselement 24 aus dem Luftspalt 20 entfernt werden, oder ein magnetisches Widerstandselement 27 aus den Öffnungen 29 der Transportstrecke 2, um den magnetische Widerstand Rm zu erhöhen. Die Regelung kann natürlich wiederum mit einer beliebigen Kombination der beschriebenen Verfahren zur Veränderung des magnetischen Flusses $\psi$ durchgeführt werden.

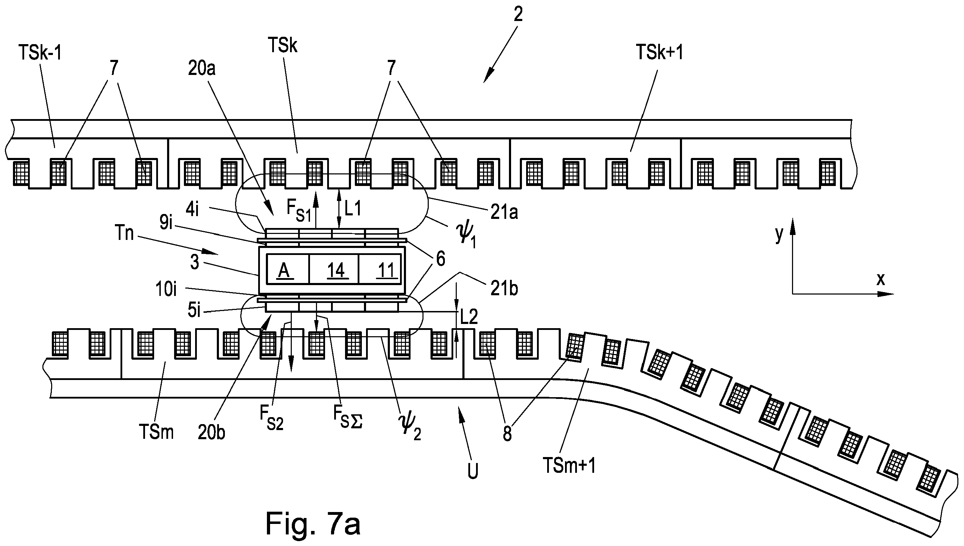

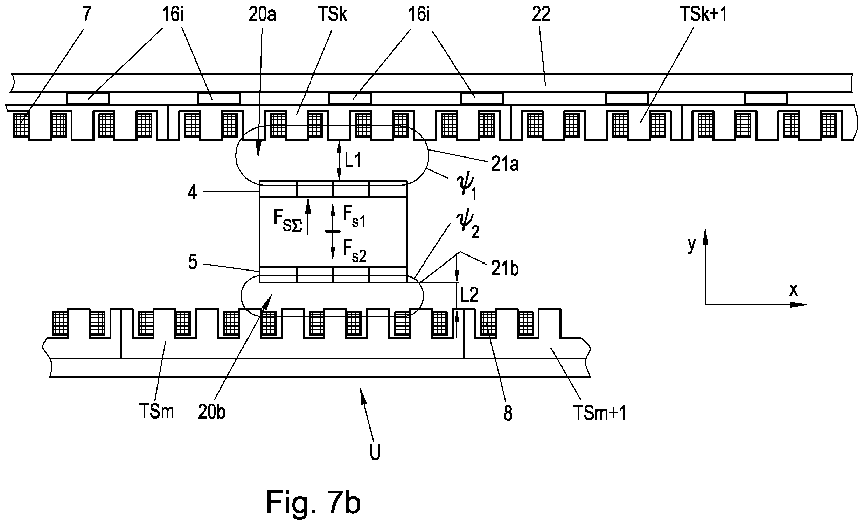

Mit Bezugnahme auf Fig. 7a und Fig. 7b wird eine weitere vorteilhafte Anwendung des erfindungsgemäßen Verfahrens zur Übergabe einer Transporteinheit Tn an einer Übergabeposition U einer Transportstrecke 2 gezeigt. Eine solche Übergabeposition U ist beispielsweise in Form einer Weiche in Fig. 1 dargestellt. Eine Übergabeposition U könnte aber natürlich auch als gerade Übergabeposition U ausgeführt sein, wie beispielsweise ebenfalls in Fig. 1 (z.B. bei Transportsegmente TS1, TS4) dargestellt ist, um die einseitige Führung der Transporteinheit Tn entlang der Transportsegmente TSk auf einer Seite auf die Transportsegmente TSm auf der anderen Seite zu übergeben. Im Bereich einer Übergabeposition U sind in Bewegungsrichtung x gesehen an beiden Seiten Antriebsspulen 7, 8 angeordnet. Die Transporteinheit Tn ist dabei so ausgeführt, dass an beiden Seiten des Grundkörpers 3 Antriebsmagnete 4i, 5i angeordnet sind, welche den an beiden Seiten angeordneten Antriebsspulen 7, 8 der Transportstrecke 2 zur Bildung einer Vortriebskraft Fv in Bewegungsrichtung x zusammenwirken. Eine Transportstrecke 2 kann aber wie bereits beschrieben auch außerhalb einer Übergabeposition U beidseitig ausgeführt sein, also mit beidseitig angeordneten Antriebsspulen 7, 8, beispielsweise, um im Vergleich zu einer einseitigen Transportstrecke 2 eine größere Vortriebskraft Fv zur Überwindung von Steigungen der Transportstrecke 2, zum Transportieren hoher Lasten oder für hohe Beschleunigungen zu erzeugen. Um eine Transporteinheit Tn vorwärts zu bewegen werden in die beidseitigen Antriebsspulen 7, 8 bekanntermaßen vorzugsweise betragsmäßig gleich große Statorströme $i_{A1}$, $i_{A2}$ eingeprägt, wobei in verschiedenen Antriebsspule 7, 8 einer Seite auch unterschiedliche Statorströme $i_{A1}$, $i_{A2}$ eingeprägt werden können. Für die Bewegung der Transporteinheit Tn müssen aber nicht gleichzeitig die beidseitig angeordneten Antriebsspulen 7, 8 durch Anlegen einer Spulenspannung mit einem Statorstromes $i_{A1}$, $i_{A2}$ bestromt werden. Es reicht grundsätzlich aus, wenn die auf die Transporteinheit Tn zur Bewegung wirkende Vortriebskraft $F_v$ nur mittels der Antriebsspulen 7, 8 einer Seite und Antriebsmagneten 4i, 5i auf der zugehörigen Seite der Transporteinheit Tn erzeugt wird.

Bekanntermaßen wirken auf die Transporteinheit Tn an den beiden Seiten in Querrichtung y immer Seitenkräfte $F_{S1}$, $F_{S2}$ aufgrund des Zusammenwirkens der Antriebsmagnete 4i, 5i der Transporteinheit Tn mit den ferromagnetischen Bestandteilen des Langstators der Transportstrecke 2, z.B. mit Zähnen 12 eines ferromagnetischen Kerns 13. Die an beiden Seiten der Transporteinheit Tn wirkenden Seitenkräfte $F_{S1}$, $F_{S2}$ sind im Normalfall, bei gleichen Luftspalten 20a, 20b gleichem Aufbau der Langstatoren an beiden Seiten, usw., gleich groß und entgegengerichtet, sodass die vektorielle Summe der wirkenden erregungsmagnetischen Seitenkräfte $F_{S1}$, $F_{S2}$ Null ergibt. Im Idealfall ist die Transporteinheit Tn daher frei von Seitenkräften. Wie bereits ausführlich beschrieben wurde, beruht die gegenständliche Erfindung darauf, dass der magnetische Fluss $\psi$ im durch die Antriebsmagnete 4i, 5i der Transporteinheit Tn und die Antriebsspulen 7, 8 ausgebildeten magnetischen Kreis 21 durch Veränderung des magnetischen Widerstandes Rm und/oder der magnetischen Spannung Um gezielt beeinflusst wird. Diese erfindungsgemäße Veränderung des magnetischen Flusses $\psi$ durch Veränderung des magnetischen Widerstands Rm und/oder der magnetischen Spannung Um kann nun aber auch in einer Übergabeposition U wie in Fig. 7a und 7b dargestellt, dazu genutzt werden, die Seitenkräfte $F_{S1}$, $F_{S2}$ gezielt so zu beeinflussen, dass ein Lenkungseffekt der Transporteinheit Tn erzielt wird. Dabei sei angemerkt, dass die Transporteinheit Tn dabei ihre Position in Querrichtung Y nicht verändert, da die Transporteinheit Tn von einer (nicht dargestellten) Führung möglichst zentral zwischen den beiden Transportsegmenten TSk, TSm gehalten wird. Der Lenkungseffekt bedeutet also nur, dass sich die Kraftverhältnisse an der Transporteinheit Tn im Bereich der Übergabeposition U ändern, nicht aber dessen Position in Querrichtung Y.

Am Beispiel der Ausführungsform in Fig. 7a (entspricht vom Prinzip der Ausführungsform gemäß Fig. 2a) mit beidseitig an der Transporteinheit Tn angeordneten und auf beweglichen, mittels ersten Stellgliedern 9i, 10i betätigbaren Trägerplatten 6 angeordneten Antriebsmagneten 4i, 5i wird beispielsweise der Luftspaltabstand L1 des Luftspalts 20a auf einer Seite der Transporteinheit Tn zwischen Antriebsmagneten 4 und Antriebsspulen 7 vergrößert und/oder der Luftspaltabstand L2 des Luftspalts 20b auf der anderen Seite der Transporteinheit Tn zwischen Antriebsmagneten 5i und Antriebsspulen 8 verringert (oder umgekehrt, je nach Steuerung der Transporteinheit Tn an der Übergabeposition U). Es wäre natürlich auch möglich, nur den Luftspaltabstand L1 des Luftspalts 20a der einen Seite zu vergrößern und den Luftspaltabstand L2 des Luftspalts 20b auf der anderen Seite konstant zu halten, wichtig ist hierbei nur die relative Veränderung der Luftspalte 20a, 20b zueinander. Bei einer alternativen Ausführungsform der Transporteinheit Tn bzw. der Verstellung des Luftspalts wie anhand Fig. 2b und Fig. 2c beschrieben wurde, könnten natürlich auch die Abstände Li und Winkel $\alpha_i$ im Luftspalt 20 zwischen einzelnen Antriebsmagneten 4i, 5i und Antriebsspulen 7, 8 verstellt werden. Aufgrund der nunmehr unterschiedlich großen Luftspaltabstände L1 $\neq$ L2 ergeben sich an den beiden Seiten unterschiedlich große magnetische Flüsse $\psi_1 \neq \psi_2$ in den magnetischen Kreisen 21a, 21b, was unter der Annahme gleichbleibender Spulenspannungen bzw. Statorstöme $i_{A1}$, $i_{A2}$ zu unterschiedlich großen erregungsmagnetischen Seitenkräften $F_{S2} \neq F_{S1}$ führt. Damit ergibt sich aus der vektoriellen Summe der beiden erregungsmagnetischen Seitenkräfte $F_{S2}$, $F_{S1}$ eine resultierende Seitenkraft $F_{S\Sigma}$ in Querrichtung y in Richtung einer der beiden Seiten. Bewegt sich die Transporteinheit Tn nun in Bewegungsrichtung x weiter in den divergierenden Bereich der Übergabeposition U, bewirkt diese resultierende Seitenkraft $F_{S\Sigma}$, dass die Transporteinheit Tn entlang des Transportsegments TSm+1 weiterbewegt wird. Dadurch wird es ermöglicht, die Transporteinheit Tn durch gezielte Veränderung des magnetischen Flusses $\psi_1$, $\psi_2$ in den beiden magnetischen Kreisen 21a, 21b gezielt in eine Richtung zu lenken, hier beispielsweise in Richtung des unteren Streckenabschnitts, ohne die Spulenspannungen bzw. Statorströme $i_{A1}$, $i_{A2}$ der Antriebsspulen 7, 8 zu verändern. Dieses Verfahren kann natürlich auch bei geraden Übergabepositionen U angewendet werden.

Das Übergabeverfahren könnte natürlich auch mit einer anderen beschrieben Ausführungsform zur Veränderung des magnetischen Flusses $\psi$ durchgeführt werden. In Fig. 7b ist z.B. eine Übergabeposition U dargestellt, bei der (analog der Ausführungsform gemäß Fig. 3a) an der einen Seite der Transportstrecke 2 zweite Stellglieder 16i zwischen der stationären Stützkonstruktion 22 und Transportsegmenten TSk angeordnet sind, mit denen der magnetische Fluss $\psi_1$ des magnetischen Kreises 21a verändert werden kann, indem der magnetische Widerstand Rm durch Veränderung des Luftspaltabstands L1 veränderbar ist. Wird der Luftspaltabstand L1 zwischen den Antriebsmagneten 4 und den Antriebsspulen 7 des Transportsegments TSk im Vergleich zum Luftspaltabstand L2 zwischen den Antriebsmagneten 5 und den Antriebsspulen 8 des Transportsegments Tsm verringert (L1 < L2), verringert sich der magnetische Widerstand Rm des magnetischen Kreises 21a im Vergleich zum magnetischen Widerstand Rm des magnetischen Kreises 21b. Demzufolge vergrößert sich der magnetische Fluss $\psi_1$ im magnetischen Kreis 21a im Vergleich zum magnetischen Fluss $\psi_2$ im magnetischen Kreis 21b ($\psi_1 > \psi_2$), wodurch eine Seitenkraft $F_{S1}$ resultiert, die größer ist als die Seitenkraft $F_{S2}(F_{S1} > F_{S2})$ ist, wodurch auf die Transporteinheit Tn folglich eine resultierende Seitenkraft $F_{S\Sigma}$ in Richtung des oberen Transportsegments TSk wirkt und die Transporteinheit Tn bei Weiterbewegung damit sicher entlang des Transportsegments TSk, TSk+1 geführt wird.

Außerhalb des Bereichs der Übergabeposition U können die erregungsmagnetischen Seitenkräfte $F_{S2}$, $F_{S1}$ natürlich wieder gleich sein (sofern eine beidseitige Anordnung von Antriebsspulen 7, 8 vorgesehen ist), da keine Lenkwirkung mehr benötigt wird.

Weiters könnten auch das Verfahren zur Veränderung des magnetischen Widerstandes Rm mittels magnetischen Widerstandelementen 24, 27 zur Übergabe der Transporteinheit in einer Übergabeposition U verwendet werden oder auch die erfindungsgemäße Zusatzspule 25 an der Transporteinheit Tn zur Veränderung der magnetischen Spannung Um an der Transporteinheit Tn. Auch eine beliebige Kombination der beschriebenen Möglichkeiten zur Veränderung des magnetischen Flusses $\psi$ auf einer oder beiden Seiten ist denkbar. Da diese Verfahren bereits ausreichend beschrieben wurden und den Erfindungsgedanken der Veränderung des magnetischen Flusses $\psi$ verfolgen, wird darauf in Bezug auf die Übergabeposition U nicht nochmals gesondert eingegangen.

**Patentansprüche**

1. Verfahren zum Betreiben einer Transporteinrichtung (1) in Form eines Langstatorlinearmotors bei dem eine Transporteinheit (Tn) entlang einer Transportstrecke des Langstatorlinearmotors bewegt wird, wobei Antriebsmagnete (4, 5) der Transporteinheit (Tn) zur Erzeugung einer Vortriebskraft mit Antriebsspulen (7, 8) der Transportstrecke zusammenwirken, wobei die Antriebsmagnete (4, 5) der Transporteinheit (Tn) und die Antriebsspulen (7, 8) der Transportstrecke des Langstatorlinearmotors magnetische Spannungsquellen eines sich ausbildenden magnetischen Kreises (21) sind, wobei eine Größe des magnetischen Kreises (21) mittels einer Regelungseinheit (10, 14) geregelt wird, indem der magnetische Widerstand (Rm) und/oder die magnetische Spannung (Um) an der Transporteinheit (Tn) von der Regelungseinheit (10, 14) während der Bewegung der Transporteinheit (Tn) entlang der Transportstrecke (2) verändert wird.

2. Verfahren nach Anspruch 1 **dadurch gekennzeichnet, dass** ein Ist-Fluss ($\psi$ist) im magnetischen Kreis (21) ermittelt wird und die Regelungseinheit (10, 14) den magnetischen Ist-Fluss ($\psi$ist) auf einen definierten magnetischen Soll-Fluss ($\psi$soll) regelt, indem der magnetische Widerstand (Rm) und/oder die magnetische Spannung (Um) an der Transporteinheit (Tn) von der Regelungseinheit (10, 14) während der Bewegung der Transporteinheit (Tn) entlang der Transportstrecke (2) verändert wird.

3. Verfahren nach Anspruch 1 oder 2, **dadurch gekennzeichnet, dass** zur Veränderung des magnetischen Widerstands (Rm) des magnetischen Kreises (21) die Position zumindest eines Antriebsmagnets (4, 5) der Transporteinheit (Tn) mittels zumindest eines an der Transporteinheit (Tn) angeordneten und mit dem zumindest einen Antriebsmagnet (4, 5) der Transporteinheit (Tn) zusammenwirkenden ersten Stellglieds (9, 10) in zumindest einem Bewegungsfreiheitsgrad verändert wird.

4. Verfahren nach einem der Ansprüche 1 bis 3 **dadurch gekennzeichnet, dass** zur Veränderung des magnetischen Widerstands (Rm) des magnetischen Kreises (21) die Position zumindest einer Antriebsspule (7, 8) der Transportstrecke (2) mittels zumindest eines an der Transportstrecke (2) angeordneten und mit der zumindest einen Antriebsspule (7, 8) der Transportstrecke (2) zusammenwirkenden zweiten Stellglieds (16, 17) in zumindest einem Bewegungsfreiheitsgrad verändert wird.

5. Verfahren nach einem der Ansprüche 1 bis 4, **dadurch gekennzeichnet, dass** zur Veränderung des magnetischen Widerstands (Rm) des magnetischen Kreises (21) zumindest ein magnetisches Widerstandselement (24) bestimmter magnetischer Permeabilität ($\mu$) mittels zumindest eines an der Transporteinheit (Tn) oder an der Transportstrecke (2) angeordneten dritten Stellglieds (23) in einen Luftspalt (20) zwischen zumindest einem Antriebsmagnet (4, 5) der Transporteinheit (Tn) und zumindest einer damit zusammenwirkenden Antriebsspule (7, 8) der Transportstrecke (2) eingebracht wird.

6. Verfahren nach einem der Ansprüche 1 bis 5, **dadurch gekennzeichnet, dass** zur Veränderung des magnetischen Widerstands (Rm) des magnetischen Kreises (21) zumindest ein magnetisches Widerstandselement (27) bestimmter magnetischer Permeabilität ($\mu$) mittels zumindest eines an der Transportstrecke (2) angeordneten vierten Stellglieds (28) in eine, an der Transportstrecke (2) angeordneten Öffnung (29) eingebracht wird.

7. Verfahren nach einem der Ansprüche 1 bis 5, **dadurch gekennzeichnet, dass** zur Veränderung der magnetischen Spannung (Um) an der Transporteinheit (Tn) zumindest eine Zusatzspule (25) an der Transporteinheit (Tn) angeordnet wird, wobei an die Zusatzspule (25) zur zumindest zeitweisen Erhöhung oder Verringerung der magnetischen Spannung (Um) an der Transporteinheit (Tn) zumindest zeitweise eine elektrische Zusatzspannung (Uz) angelegt wird, um damit eine, der magnetischen Spannung (Um) der Antriebsmagnete (4, 5) gleich- oder entgegengerichtete, magnetische Zusatzspannung (Umz) zu erzeugen, wodurch der magnetische Fluss ($\psi$) erhöht oder verringert wird.

8. Verwendung des Verfahrens nach einem der Ansprüche 1 bis 7 zur Kompensation von Führungsungenauigkeiten der Transporteinrichtung (1), **dadurch gekennzeichnet, dass** ein, einem konstanten Luftspalt (20) entsprechender magnetischer Soll-Fluss ($\psi$soll) vorgegeben wird und dass die Regelungseinheit (10, 14) den magnetischen Ist-Fluss ($\psi$ist) auf den magnetischen Soll-Fluss ($\psi$soll) regelt, indem der magnetische Widerstand (Rm) und/oder die magnetische Spannung (Um) an der Transporteinheit (Tn) von der Regelungseinheit (10, 14) verändert wird.

9. Verwendung des Verfahrens nach einem der Ansprüche 1 bis 7 zur Übergabe der Transporteinheit (Tn) an einer Übergabeposition (U) der Transportstrecke, **dadurch gekennzeichnet, dass** an zumindest einer Seite der Transporteinheit (Tn) der magnetische Widerstand (Rm) und/oder die magnetische Spannung (Um) an der Transporteinheit (Tn) der jeweiligen Seite verändert wird, um eine auf die Transporteinheit (Tn) wirkende Seitenkraft zu erzeugen.

10. Verwendung des Verfahrens nach einem der Ansprüche 1 bis 7 zur Erhöhung der maximal erzielbaren Geschwindigkeit (Vmax) der Transporteinheit (Tn), **dadurch gekennzeichnet, dass** der magnetische Fluss ($\psi$) des magnetischen Kreises (21) verringert wird, indem der magnetische Widerstand (Rm) und/oder die magnetische Spannung (Um) an der Transporteinheit (Tn) verändert wird.

11. Transporteinrichtung (1) in Form eines Langstatorlinearmotors mit zumindest einer Transporteinheit (Tn) und zumindest einer Transportstrecke (2), wobei die Transporteinheit (Tn) einen Grundkörper (3) aufweist, wobei an zumindest einer Seite des Grundkörpers (3) Antriebsmagneten (4, 5) angeordnet sind, welche zur Erzeugung einer Vortriebskraft (Fv) mit Antriebsspulen (7, 8) der Transportstrecke (2) des Langstatorlinearmotors zusammenwirken, wobei die Antriebsmagnete (4, 5) der Transporteinheit (Tn) und die Antriebsspulen (7, 8) der Transportstrecke (2) des Langstatorlinearmotors magnetische Spannungsquellen eines sich ausbildenden magnetischen Kreises (21) sind, wobei in der Transporteinrichtung (1) eine Regelungseinheit (10, 14) vorgesehen ist, um eine Größe des magnetischen Kreises (21) zu regeln, indem der magnetische Widerstand (Rm) des magnetischen Kreises (21) mittels einer Stelleinrichtung und/oder die magnetische Spannung (Um) an der Transporteinheit (Tn) mittels einer Zusatzspule (25) von der Regelungseinheit (10, 14) während der Bewegung der Transporteinheit (Tn) entlang der Transportstrecke (2) veränderbar ist.

12. Transporteinrichtung (1) nach Anspruch 11, **dadurch gekennzeichnet, dass** die Regelungseinheit (10, 14) vorgesehen ist, einen ermittelten im magnetischen Kreis (21) magnetischen Ist-Fluss ($\psi$ist) auf einen definierten magnetischen Soll-Fluss ($\psi$soll) zu regeln, indem der magnetische Widerstand (Rm) des magnetischen Kreises (21) mittels einer Stelleinrichtung und/oder die magnetische Spannung (Um) an der Transporteinheit (Tn) mittels einer Zusatzspule (25) von der Regelungseinheit (10, 14) während der Bewegung der Transporteinheit (Tn) entlang der Transportstrecke (2) verändert wird.

13. Transporteinrichtung (1) nach Anspruch 11 oder 12, **dadurch gekennzeichnet, dass** didie Stelleinrichtung zur Veränderung des magnetischen Widerstands (Rm) des magnetischen Kreises (21) als erstes, an der Transporteinheit (Tn) angeordnetes Stellglied (9, 10) ausgeführt ist, mit dem die Position zumindest eines Antriebsmagnets (4, 5) der Transporteinheit (Tn) in zumindest einem Bewegungsfreiheitsgrad verstellbar ist.

14. Transporteinrichtung (1) nach einem der Ansprüche 11 bis 13, **dadurch gekennzeichnet, dass** die Stelleinrichtung zur Veränderung des magnetischen Widerstands (Rm) des magnetischen Kreises (21) als zweites, an der Transportstrecke angeordnetes Stellglied (16, 17) ausgeführt ist, mit dem die Position zumindest einer Antriebsspule (7, 8) in zumindest einem Bewegungsfreiheitsgrad verstellbar ist.

15. Transporteinrichtung (1) nach einem der Ansprüche 11 bis 14, **dadurch gekennzeichnet, dass** die Stelleinrichtung zur Veränderung des magnetischen Widerstands (Rm) des magnetischen Kreises (21) als zumindest ein an der Transporteinheit (Tn) oder an der Transportstrecke (2) angeordnetes drittes Stellglied (23) mit zumindest einem magnetischen Widerstandselement (24) bestimmter magnetischer Permeabilität ($\mu$) ausgeführt ist, wobei das zumindest eine magnetische Widerstandselement (24) mittels des dritten Stellglieds (23) in einen Luftspalt (20) zwischen zumindest einem Antriebsmagnet (4, 5) der Transporteinheit (Tn) und zumindest einer damit zusammenwirkenden Antriebsspule (7, 8) der Transportstrecke (2) einbringbar ist.

16. Transporteinrichtung (1) nach einem der Ansprüche 11 bis 15, **dadurch gekennzeichnet, dass** die Stelleinrichtung zur Veränderung des magnetischen Widerstands (Rm) des magnetischen Kreises (21) als zumindest ein an der Transportstrecke (2) angeordnetes viertes Stellglied (28) mit zumindest einem magnetischen Widerstandselement (27) bestimmter magnetischer Permeabilität ($\mu$) ausgeführt ist, wobei das zumindest eine magnetische Widerstandselement (27) mittels des vierten Stellglieds (28) in eine, an der Transportstrecke (2) angeordnete Öffnung (29) einbringbar ist.

17. Transporteinrichtung (1) nach einem der Ansprüche 11 bis 16, **dadurch gekennzeichnet, dass** an die Zusatzspule (25) zur zumindest zeitweisen Veränderung der magnetischen Spannung (Um) an der Transporteinheit (Tn) zumindest zeitweise eine Zusatzspannung (Uz) anlegbar ist.

18. Verwendung der Transporteinrichtung (1) nach einem der Ansprüche 11 bis 17 zur Kompensation von Führungsungenauigkeiten der Transporteinrichtung (1), **dadurch gekennzeichnet, dass** ein, einem konstanten Luftspalt (20) entsprechender magnetischer Soll-Fluss ($\psi$soll) vorgegeben wird und dass die Regelungseinheit (10, 14) den magnetischen Ist-Fluss ($\psi$ist) im magnetischen Kreis (21) auf den magnetischen Soll-Fluss ($\psi$soll) regelt.

19. Verwendung der Transporteinrichtung (1) nach einem der Ansprüche 11 bis 17 zur Übergabe der Transporteinheit (Tn) an einer Übergabeposition (U) der Transportstrecke, **dadurch gekennzeichnet, dass** an zumindest einer Seite der Transporteinheit (Tn) der magnetische Widerstand (Rm) des magnetischen Kreises (21) mittels der Stelleinrichtung verändert wird und/oder die magnetische Spannung (Um) an der Transporteinheit (Tn) mittels der Zusatzspule (25) verändert wird, um eine Seitenkraft auf die Transporteinheit (Tn) zu erzeugen.

20. Verwendung der Transporteinrichtung (1) nach einem der Ansprüche 11 bis 17 zur Erhöhung der maximal erzielbaren Geschwindigkeit (Vmax) der Transporteinheit (Tn), **dadurch gekennzeichnet,**

**dass** der magnetische Fluss ($\psi$) des magnetischen Kreises (21) verringert wird, indem der magnetische Widerstand (Rm) des magnetischen Kreises (21) mittels der Stelleinrichtung verändert wird und/oder die magnetische Spannung (Um) an der Transporteinheit (Tn) mittels der Zusatzspule (25) verändert wird.

**Claims**

1. A method for operating a transport apparatus (1) in the form of a long stator linear motor, in which a transport unit (Tn) is moved along a transport route of the long stator linear motor, drive magnets (4, 5) of the transport unit (Tn) interacting with drive coils (7, 8) of the transport route in order to generate a propulsive force, the drive magnets (4, 5) of the transport unit (Tn) and the drive coils (7, 8) of the transport route of the long stator linear motor being sources of magnetomotive force for a developing magnetic circuit (21), wherein a variable of the magnetic circuit (21) is controlled by a control unit (10, 14), by changing the magnetic resistance (Rm) and/or the magnetomotive force (Um) on the transport unit (Tn) with the control unit (10, 14) during movement of the transport unit (Tn) along the transport route (2).

2. The method according to claim 1, **characterized in that** an actual magnetic flux ($\psi_{ist}$) in the magnetic circuit (21) is determined, and **in that** the control unit (10, 14) controls the actual magnetic flux ($\psi_{ist}$) to a defined target magnetic flux ($\psi_{soll}$) by changing the magnetic reluctance (Rm) and/or the magnetomotive force (Um) on the transport unit (Tn) with the control unit (10, 14) during movement of the transport unit (Tn) along the transport route (2).

3. The method according to claim 1 or 2, **characterized in that,** in order to change the magnetic reluctance (Rm) of the magnetic circuit (21), the position of at least one drive magnet (4, 5) of the transport unit (Tn) is changed, in at least one degree of freedom of movement, by means of at least one first actuator (9, 10) that is arranged on the transport unit (Tn) and interacts with the at least one drive magnet (4, 5) of the transport unit (Tn).

4. The method according to any of claims 1 to 3, **characterized in that,** in order to change the magnetic reluctance (Rm) of the magnetic circuit (21), the position of at least one drive coil (7, 8) of the transport route (2) is changed, in at least one degree of freedom of movement, by means of at least one second actuator (16, 17) that is arranged on the transport route (2) and interacts with the at least one drive coil (7, 8) of the transport route (2).

5. The method according to any of claims 1 to 4, **characterized in that,** in order to change the magnetic reluctance (Rm) of the magnetic circuit (21), at least one magnetic reluctance element (24) having a specified magnetic permeability ($\mu$) is introduced into an air gap (20) between at least one drive magnet (4, 5) of the transport unit (Tn) and at least one drive coil (7, 8) of the transport route (2) that interacts therewith, by means of at least one third actuator (23) arranged on the transport unit (Tn) or on the transport route (2).

6. The method according to any of claims 1 to 5, **characterized in that,** in order to change the magnetic reluctance (Rm) of the magnetic circuit (21), at least one magnetic reluctance element (27) having a specified magnetic permeability ($\mu$) is introduced into an opening (29), arranged on the transport route (2), by means of at least one fourth actuator (28) arranged on the transport route (2).

7. The method according to any of claims 1 to 5, **characterized in that,** in order to change the magnetomotive force (Um) on the transport unit (Tn), at least one additional coil (25) is arranged on the transport unit (Tn), wherein an electrical boost voltage (Uz) is applied to the additional coil (25), at least intermittently, in order to at least intermittently increase or reduce the magnetomotive force (Um) on the transport unit (Tn), in order to generate a magnetomotive boost force (Umz) that is oriented in the same direction as or counter to the magnetomotive force (Um) of the drive magnets (4, 5), as a result of which the magnetic flux ($\psi$) is increased or reduced.

8. Use of the method according to any of claims 1 to 7 for compensating for guidance inaccuracies of the transport apparatus (1), **characterized in that** a target magnetic flux ($\psi_{soll}$), corresponding to a constant air gap (20), is defined and **in that** the control unit (10, 14) controls the actual magnetic flux ($\psi_{ist}$) to the defined target magnetic flux ($\psi_{soll}$) by means of the magnetic reluctance (Rm) and/or the magnetomotive force (Um) on the transport unit (Tn) being changed by the control unit (10, 14).

9. Use of the method according to any of claims 1 to 7 for transferring the transport apparatus (Tn) at a transfer position (U) of the transport route, **characterized in that,** on at least one side of the transport unit (Tn), the magnetic reluctance (Rm) and/or the magnetomotive force (Um) on the transport unit (Tn) is changed on the respective side in order to generate a lateral force that acts on the transport unit (Tn).

10. Use of the method according to any of claims 1 to 7 for increasing the maximum achievable speed (Vmax) of the transport unit (Tn), **characterized in**

**that** the magnetic flux ($\psi$) of the magnetic circuit (21) is reduced by changing the magnetic reluctance (Rm) and/or the magnetomotive force (Um) on the transport unit (Tn).

11. A transport apparatus (1) in the form of a long stator linear motor comprising at least one transport unit (Tn) and at least one transport route (2), the transport unit (Tn) comprising a main body (3), drive magnets (4, 5) being arranged on at least one side of the main body (3), which drive magnets interact with drive coils (7, 8) of the transport route (2) of the long stator linear motor in order to generate a propulsive force (Fv), the drive magnets (4, 5) of the transport unit (Tn) and the drive coils (7, 8) of the transport route (2) of the long stator linear motor being sources of magnetomotive force of a developing magnetic circuit (21), wherein a control unit (10, 14) is provided in the transport apparatus (1) for controlling a variable of the magnetic circuit (21) by adjusting the magnetic reluctance (Rm) by means of an actuator and/or the magnetomotive force (Um) by means of an additional coil (25) on the transport unit (Tn) during movement of the transport unit (Tn) along the transport route (2).

12. The transport apparatus (1) according to claim 11, **characterized in that** the control unit (10, 14) is provided for controlling an actual magnetic flux ($\psi_{ist}$), determined in the magnetic circuit (21), to a defined target magnetic flux ($\psi_{soll}$) by changing the magnetic reluctance (Rm) by means of an actuator and/or the magnetomotive force (Um) by means of an additional coil (25) on the transport unit (Tn) during movement of the transport unit (Tn) along the transport route (2).

13. The transport apparatus (1) according to claim 11 or 12, **characterized in that** the actuator means for changing the magnetic reluctance (Rm) of the magnetic circuit (21) is formed as a first actuator (9, 10) which is arranged on the transport unit (Tn) and by means of which the position of at least one drive magnet (4, 5) of the transport unit (Tn) can be adjusted in at least one degree of freedom of movement.

14. The transport apparatus (1) according to any of claims 11 to 13, **characterized in that** the actuator means for changing the magnetic reluctance (Rm) of the magnetic circuit (21) is formed as a second actuator (16, 17) which is arranged on the transport route and by means of which the position of at least one drive coil (7, 8) can be adjusted in at least one degree of freedom of movement.

15. The transport apparatus (1) according to any of claims 11 to 14, **characterized in that** the actuator means for changing the magnetic reluctance (Rm) of the magnetic circuit (21) is formed as at least one third actuator (23) which is arranged on the transport unit (Tn) or on the transport route (2) and which comprises at least one magnetic reluctance element (24) having a specified magnetic permeability ($\mu$), the at least one magnetic reluctance element (24) being insertable, by means of the third actuator (23), into an air gap (20) between at least one drive magnet (4, 5) of the transport unit (Tn) and at least one drive coil (7, 8) of the transport route (2) that interacts therewith.

16. The transport apparatus (1) according to any of claims 11 to 15, **characterized in that** the actuator means for changing the magnetic reluctance (Rm) of the magnetic circuit (21) is formed as at least one fourth actuator (28) which is arranged on the transport route (2) and which comprises at least one magnetic reluctance element (27) having a specified magnetic permeability ($\mu$), the at least one magnetic reluctance element (27) being insertable, by means of the fourth actuator (28), into an opening (29) arranged on the transport route (2).

17. The transport apparatus (1) according to any of claims 11 to16, **characterized in that,** in order to at least intermittently change the magnetomotive force (Um) on the transport unit (Tn), a boost voltage (Uz) can be applied at least intermittently to the additional coil (25).

18. Use of the transport apparatus (1) according to any of claims 11 to 17 for compensating for guidance inaccuracies of the transport apparatus (1), **characterized in that** a target magnetic flux ($\psi_{soll}$), corresponding to a constant air gap (20) is defined and that the control unit (10, 14) controls the actual magnetic flux ($\psi_{ist}$) in the magnetic circuit (21) to the defined target magnetic flux ($\psi_{soll}$).

19. Use of the transport apparatus (1) according to any of claims 11 to 17 for transferring the transport apparatus (Tn) at a transfer position (U) of the transport route, **characterized in that,** on at least one side of the transport unit (Tn), the magnetic reluctance (Rm) of the magnetic circuit (21) is changed by the actuator means and/or the magnetomotive force (Um) on the transport unit (Tn) is changed by the additional coil (25) in order to generate a lateral force on the transport unit (Tn).

20. Use of the transport apparatus (1) according to any of claims 11 to 17 for increasing the maximum achievable speed (Vmax) of the transport unit (Tn), **characterized in that** the magnetic flux ($\psi$) of the magnetic circuit (21) is reduced by means of changing the magnetic reluctance (Rm) of the magnetic circuit (21) using the actuator means and/or by means of changing the magnetomotive force (Um) on the transport unit (Tn) using the additional coil (25).

**Revendications**

1. Procédé de fonctionnement d'un dispositif de transport (1) sous la forme d'un moteur linéaire à stator long, dans lequel une unité de transport (Tn) est déplacée le long d'un trajet de transport du moteur linéaire à stator long, des aimants d'entraînement (4, 5) de l'unité de transport (Tn) coopérant avec des bobines d'entraînement (7, 8) du trajet de transport afin de générer une force de propulsion, les aimants d'entraînement (4, 5) de l'unité de transport (Tn) et les bobines d'entraînement (7, 8) du trajet de transport du moteur linéaire à stator long étant des sources de tension magnétique d'un circuit magnétique (21) en cours de formation, la taille du circuit magnétique (21) étant réglée au moyen d'une unité de réglage (10, 14) par la modification, par l'unité de réglage (10, 14), de la résistance magnétique (Rm) et/ou de la tension magnétique (Um) au niveau de l'unité de transport (Tn) pendant le déplacement de l'unité de transport (Tn) le long du trajet de transport (2).

2. Procédé selon la revendication 1, **caractérisé en ce qu'un** flux réel ($\psi$ist) est déterminé dans le circuit magnétique (21) et l'unité de réglage (10, 14) régule le flux magnétique réel ($\psi$ist) sur un flux magnétique de consigne ($\psi$soll) défini par la modification, par l'unité de réglage (10, 14), de la résistance magnétique (Rm) et/ou de la tension magnétique (Um) au niveau de l'unité de transport (Tn) pendant le déplacement de l'unité de transport (Tn) le long du trajet de transport (2).

3. Procédé selon la revendication 1 ou 2, **caractérisé en ce que,** pour modifier la résistance magnétique (Rm) du circuit magnétique (21), la position d'au moins un aimant d'entraînement (4, 5) de l'unité de transport (Tn) est modifiée par au moins un degré de liberté de déplacement au moyen d'au moins un premier organe d'ajustement (9, 10) disposé au niveau de l'unité de transport (Tn) et coopérant avec l'au moins un aimant d'entraînement (4, 5) de l'unité de transport (Tn).

4. Procédé selon la revendication 1 ou 3, **caractérisé en ce que,** pour modifier la résistance magnétique (Rm) du circuit magnétique (21), la position d'au moins une bobine d'entraînement (7, 8) du trajet de transport (2) est modifiée par au moins un degré de liberté de déplacement au moyen d'au moins un deuxième organe d'ajustement (16, 17) disposé au niveau du trajet de transport (2) et coopérant avec l'au moins une bobine d'entraînement (7, 8) du trajet de transport (2).

5. Procédé selon l'une des revendications 1 à 4, **caractérisé en ce que,** pour modifier la résistance magnétique (Rm) du circuit magnétique (21), au moins un élément de résistance magnétique (24) d'une perméabilité magnétique déterminée ($\mu$) est inséré dans un entrefer (20) entre au moins un aimant d'entraînement (4, 5) de l'unité de transport (Tn) et au moins une bobine d'entraînement (7, 8) du trajet de transport (2) coopérant avec celui-ci au moyen d'au moins un troisième organe d'ajustement (23) disposé au niveau de l'unité de transport (Tn) ou au niveau du trajet de transport (2).

6. Procédé selon l'une des revendications 1 à 5, **caractérisé en ce que,** pour modifier la résistance magnétique (Rm) du circuit magnétique (21), au moins un élément de résistance magnétique (27) d'une perméabilité magnétique déterminée ($\mu$) est inséré dans une ouverture (29) disposée au niveau du trajet de transport (2) au moyen d'au moins un quatrième organe d'ajustement (28) disposé au niveau du trajet de transport (2).

7. Procédé selon l'une des revendications 1 à 5, **caractérisé en ce que,** pour modifier la tension magnétique (Um) au niveau de l'unité de transport (Tn), au moins une bobine supplémentaire (25) est disposée au niveau de l'unité de transport (Tn), une tension électrique supplémentaire (Uz) est appliquée au moins temporairement à la bobine supplémentaire (25) afin d'augmenter ou de diminuer au moins temporairement la tension magnétique (Um) au niveau de l'unité de transport (Tn) afin de générer ainsi une tension magnétique supplémentaire (Umz) dans le même sens ou dans le sens contraire à la tension magnétique (Um) des aimants d'entraînement (4, 5), ce qui permet d'augmenter ou de diminuer le flux magnétique ($\psi$).

8. Utilisation du procédé selon l'une des revendications 1 à 7 pour compenser les imprécisions de guidage du dispositif de transport (1), **caractérisée en ce qu'un** flux magnétique de consigne ($\psi$soll) correspondant à un entrefer (20) constant est spécifié et que l'unité de réglage (10, 14) régule le flux magnétique réel ($\psi$ist) sur le flux magnétique de consigne ($\psi$soll) en modifiant la résistance magnétique (Rm) et/ou la tension magnétique (Um) au niveau de l'unité de transport (Tn) par l'unité de réglage (10, 14).

9. Utilisation du procédé selon l'une des revendications 1 à 7 pour transférer l'unité de transport (Tn) à une position de transfert (U) du trajet de transport, **caractérisée en ce que,** sur au moins un côté de l'unité de transport (Tn), la résistance magnétique (Rm) et/ou la tension magnétique (Um) sont modifiées au niveau de l'unité de transport (Tn) du côté respectif afin de générer une force latérale agissant sur l'unité de transport (Tn).

10. Utilisation du procédé selon l'une des revendications 1 à 7 pour augmenter la vitesse maximale atteignable (Vmax) de l'unité de transport (Tn), **caractérisée en ce que** le flux magnétique (ψ) du circuit magnétique (21) est réduit en modifiant la résistance magnétique (Rm) et/ou la tension magnétique (Um) au niveau de l'unité de transport (Tn).

11. Dispositif de transport (1) sous la forme d'un moteur linéaire à stator long comportant au moins une unité de transport (Tn) et au moins un trajet de transport (2), l'unité de transport (Tn) présentant un corps de base (3), des aimants d'entraînement (4, 5) étant disposés sur au moins un côté du corps de base (3), lesquels coopèrent avec les bobines d'entraînement (7, 8) du trajet de transport (2) du moteur linéaire à stator long afin de générer une force de propulsion (Fv), les aimants d'entraînement (4, 5) de l'unité de transport (Tn) et les bobines d'entraînement (7, 8) du trajet de transport (2) du moteur linéaire à stator long étant des sources de tension magnétique d'un circuit magnétique (21) en cours de formation, une unité de réglage (10, 14) étant prévue dans le dispositif de transport (1) pour régler la taille du circuit magnétique (21) en pouvant modifier la résistance magnétique (Rm) du circuit magnétique (21) par l'unité de réglage (10, 14) au moyen d'un dispositif d'ajustement et/ou la tension magnétique (Um) au niveau de l'unité de transport (Tn) au moyen d'une bobine supplémentaire (25) pendant le déplacement de l'unité de transport (Tn) le long du trajet de transport (2).

12. Dispositif de transport (1) selon la revendication 11, **caractérisé en ce que** l'unité de réglage (10, 14) est prévue pour régler un flux magnétique réel (ψist) déterminé dans le circuit magnétique (21) sur un flux magnétique de consigne (ψsoll) défini par la modification, par l'unité de réglage (10, 14), de la résistance magnétique (Rm) du circuit magnétique (21) au moyen d'un dispositif d'ajustement et/ou de la tension magnétique (Um) au niveau de l'unité de transport (Tn) au moyen d'une bobine supplémentaire (25) pendant le déplacement de l'unité de transport (Tn) le long du trajet de transport (2).

13. Dispositif de transport (1) selon la revendication 11 ou 12, **caractérisé en ce que** le dispositif d'ajustement permettant la modification de la résistance magnétique (Rm) du circuit magnétique (21) est réalisé sous la forme d'un premier organe d'ajustement (9, 10) disposé au niveau de l'unité de transport (Tn), au moyen duquel la position d'au moins un aimant d'entraînement (4, 5) de l'unité de transport (Tn) peut être ajustée dans au moins un degré de liberté de déplacement.

14. Dispositif de transport (1) selon la revendication 11 ou 13, **caractérisé en ce que** le dispositif d'ajustement permettant la modification de la résistance magnétique (Rm) du circuit magnétique (21) est réalisé sous la forme d'un deuxième organe d'ajustement (16, 17) disposé au niveau du trajet de transport, au moyen duquel la position d'au moins une bobine d'entraînement (7, 8) peut être ajustée dans au moins un degré de liberté de déplacement.

15. Dispositif de transport (1) selon l'une des revendications 11 à 14, **caractérisé en ce que** le dispositif d'ajustement permettant la modification de la résistance magnétique (Rm) du circuit magnétique (21) est réalisé sous la forme d'au moins un troisième organe d'ajustement (23) disposé au niveau de l'unité de transport (Tn) ou au niveau du trajet de transport (2) et comportant au moins un élément de résistance magnétique (24) d'une perméabilité magnétique déterminée (μ), l'au moins un élément de résistance magnétique (24) pouvant être inséré dans un entrefer (20) entre au moins un aimant d'entraînement (4, 5) de l'unité de transport (Tn) et au moins une bobine d'entraînement (7, 8) du trajet de transport (2) coopérant avec celui-ci au moyen du troisième organe d'ajustement (23).

16. Dispositif de transport (1) selon l'une des revendications 11 à 15, **caractérisé en ce que** le dispositif d'ajustement permettant la modification de la résistance magnétique (Rm) du circuit magnétique (21) est réalisé sous la forme d'au moins un quatrième organe d'ajustement (28) disposé au niveau du trajet de transport (2) et comportant au moins un élément de résistance magnétique (27) d'une perméabilité magnétique déterminée (μ), l'au moins un élément de résistance magnétique (27) pouvant être inséré dans une ouverture (29) disposée au niveau du trajet de transport (2) au moyen du quatrième organe d'ajustement (28).

17. Dispositif de transport (1) selon l'une des revendications 11 à 16, **caractérisé en ce qu'**une tension supplémentaire (Uz) peut être appliquée au moins temporairement à la bobine supplémentaire (25) afin de modifier au moins temporairement la tension magnétique (Um) au niveau de l'unité de transport (Tn).

18. Utilisation du dispositif de transport (1) selon l'une des revendications 11 à 17 pour compenser les imprécisions de guidage du dispositif de transport (1), **caractérisée en ce qu'**un flux magnétique de consigne (ψsoll) correspondant à un entrefer (20) constant est spécifié et que l'unité de réglage (10, 14) régule le flux magnétique réel ($\psi$ist) dans le circuit magnétique (21) sur le flux magnétique de consigne ($\psi$soll).

**19.** Utilisation du dispositif de transport (1) selon l'une des revendications 11 à 17 pour transférer l'unité de transport (Tn) à une position de transfert (U) du trajet de transport, **caractérisée en ce que** sur au moins un côté de l'unité de transport (Tn), la résistance magnétique (Rm) du circuit magnétique (21) est modifiée au moyen du dispositif d'ajustement et/ou la tension magnétique (Um) au niveau de l'unité de transport (Tn) est modifiée au moyen de la bobine supplémentaire (25), afin de générer une force latérale sur l'unité de transport (Tn).

**20.** Utilisation du dispositif de transport (1) selon l'une des revendications 11 à 17 pour augmenter la vitesse maximale atteignable (Vmax) de l'unité de transport (Tn), **caractérisée en ce que** le flux magnétique ($\psi$) du circuit magnétique (21) est diminué en modifiant la résistance magnétique (Rm) du circuit magnétique (21) au moyen du dispositif d'ajustement et/ou la tension magnétique (Um) au niveau de l'unité de transport (Tn) au moyen de la bobine supplémentaire (25).

Fig. 1

Fig. 2a

Fig. 2b

Fig. 2c

Fig. 3a

Fig. 3b

EP 3 422 562 B1

Fig. 4

Fig. 6

Fig. 4a

EP 3 422 562 B1

Fig. 5

Fig. 7a

Fig. 7b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013143783 A1
- US 6876107 B2
- US 20130074724 A1
- WO 2004103792 A1
- DE 102014118335 A1
- JP H03169253 A
- EP 1739812 A2
- DE 102012224179 A1
- DE 102016112618 A1
- EP 3109998 A1